(19) **Europäisches Patentamt / European Patent Office / Office européen des brevets**

(11) **EP 1 905 170 B1**

(12) **EUROPEAN PATENT SPECIFICATION**

(45) Date of publication and mention
of the grant of the patent:
**20.12.2017  Bulletin 2017/51**

(21) Application number: **06787809.0**

(22) Date of filing: **18.07.2006**

(51) Int Cl.:
***H04W 52/36*** (2009.01)

(86) International application number:
**PCT/US2006/027968**

(87) International publication number:
**WO 2007/011984 (25.01.2007 Gazette 2007/04)**

(54) **POWER THROTTLING IN THE REVERSE LINK IN A MULTI-CARRIER WIRELESS COMMUNICATION SYSTEM**

LEISTUNGSDROSSELUNG IN DER RÜCKWÄRTSVERBINDUNG IN EINEM DRAHTLOSEN MEHRTRÄGERKOMMUNIKATIONSSYSTEM

REDUCTION DE PUISSANCE DANS LA LIAISON INVERSE DANS UN SYSTEME DE COMMUNICATION SANS FIL MULTI-PORTEUSE

(84) Designated Contracting States:
**AT BE BG CH CY CZ DE DK EE ES FI FR GB GR HU IE IS IT LI LT LU LV MC NL PL PT RO SE SI SK TR**

(30) Priority: **18.07.2005  US 700532 P**

(43) Date of publication of application:
**02.04.2008  Bulletin 2008/14**

(73) Proprietor: **Qualcomm Incorporated San Diego, CA 92121 (US)**

(72) Inventors:
• **ATTAR, Rashid Ahmed Akbar San Diego, California 92127 (US)**

• **GHOSH, Donna San Diego, California 92126 (US)**
• **LOTT, Christopher, Gerard San Diego, California 92117 (US)**
• **BHUSHAN, Naga Qualcomm Incorporated San Diego, California 92121-174 (US)**

(74) Representative: **Tomkins & Co 5 Dartmouth Road Dublin 6 (IE)**

(56) References cited:
WO-A-01/24568          US-A1- 2004 252 658
US-A1- 2005 059 421    US-A1- 2005 147 022

**Description**

**BACKGROUND**

**Field**

The present application for patent relates generally to multi-carrier wireless communication systems, and more specifically to reverse link power throttling.

**Background**

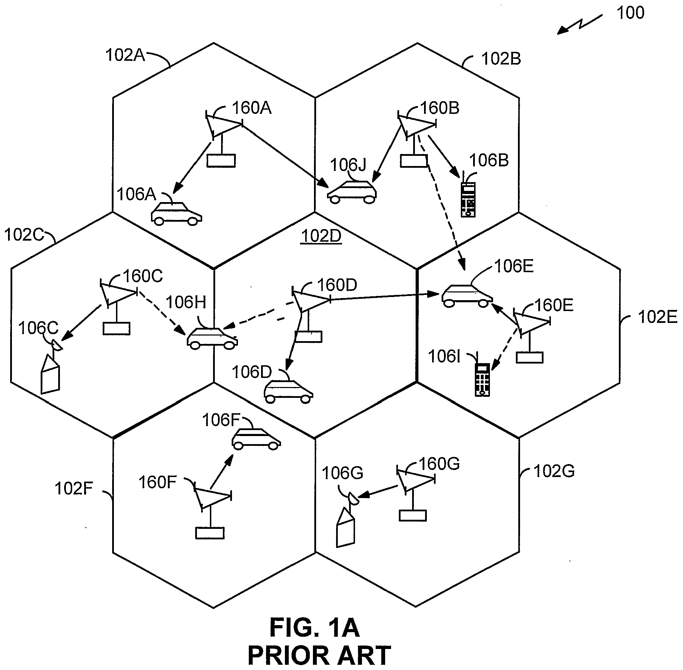

Communication systems 100 may use a single carrier frequency or multiple carrier frequencies. In wireless communication systems 100, the forward link refers to communications from the access network (AN) 120 to the remote station 106 (or access terminal 106), while reverse link refers to communications from the remote station 106 to the network 120. (The AT 106 is also known as a remote station, a mobile station or a subscriber station. Also, the access terminal (AT) 106, may be mobile or stationary). Each link may incorporate a different number of carrier frequencies. An example of a cellular communication system 100 is shown in FIG. 1A where reference numerals 102A to 102G refer to cells, reference numerals 160A to 160G refer to base stations and reference numerals 106A to 106G refer to access terminals.

The communication system 100 may be a code division multiple access (CDMA) system having a high data rate (HDR) overlay system, such as specified in the HDR standard. The AN 120 communicates with an AT, as well as any other ATs 106 within system, by way of the air interface. The AN 120 includes multiple sectors, wherein each sector provides at least one channel. A channel is defined as the set of communication links for transmissions between the AN 120 and the ATs 106 within a given frequency assignment. A channel consists of a forward link and a reverse link.

A high data rate subscriber station 106 may communicate with one or more HDR base stations 160, referred to herein as modem pool transceivers (MPTs) 160 via an air interface. An access terminal 106 transmits and receives data packets through one or more modem pool transceivers 160 to an HDR base station controller 130, referred to herein as a modem pool controller (MPC) 130. Modem pool transceivers 160 and modem pool controllers 130 are parts of the access network (AN) 120. The access network 120 may be further connected to additional networks 104 outside the access network 120, such as a corporate intranet or the Internet, and may transport data packets between each access terminal 106 and such outside networks. An access terminal 106 that has established an active traffic channel connection with one or more modem pool transceivers 160 is called an active access terminal 106, and is said to be in a traffic state. An access terminal 106 that is in the process of establishing an active traffic channel connection with one or more modem pool transceivers 130 is said to be in a connection setup state. An access terminal 106 may be any data device that communicates through a wireless channel or through a wired channel, for example using fiber optic or coaxial cables. An access terminal 106 may further be any of a number of types of devices including but not limited to PC card, compact flash, external or internal modem, or wireless or wireline phone. The communication link through which the access terminal 106 sends signals to the modem pool transceiver 160 is called a reverse link. The communication link through which a modem pool transceiver 160 sends signals to an access terminal 106 is called a forward link.

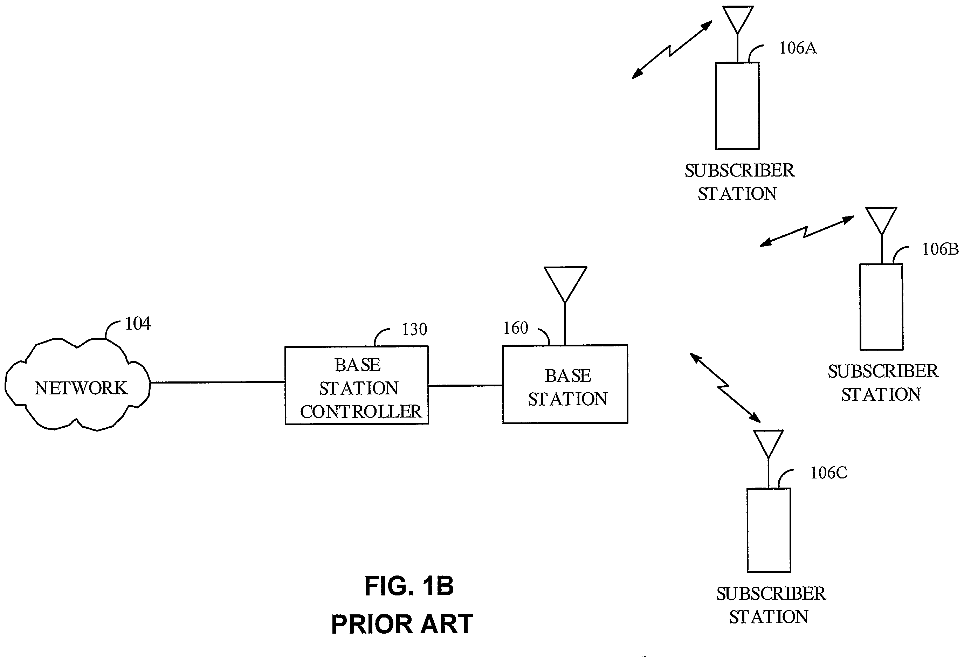

FIG. 1B is a simplified functional block diagrams of an exemplary CDMA communications system. A base station controller 130 can be used to provide an interface between a network 104 and all base stations 160 dispersed throughout a geographic region. For ease of explanation, only one base station 160 is shown. The geographic region is generally subdivided into smaller regions known as cells 102. Each base station 160 is configured to serve all subscriber stations 106 in its respective cell. In some high traffic applications, the cell 102 may be divided into sectors with a base station 160 serving each sector. In the described exemplary embodiment, three subscriber stations 106A-C are shown in communication with the base station 160. Each subscriber station 106A-C may access the network 104, or communicate with other subscriber stations 106, through one or more base stations 160 under control of the base station controller 130.

Modern communications systems are designed to allow multiple users to access a common communications medium. Numerous multiple-access techniques are known in the art, such as time division multiple-access (TDMA), frequency division multiple-access (FDMA), space division multiple-access, polarization division multiple-access, code division multiple-access (CDMA), and other similar multi-access techniques. The multiple-access concept is a channel allocation methodology which allows multiple user access to a common communications link. The channel allocations can take on various forms depending on the specific multi-access technique. By way of example, in FDMA systems, the total frequency spectrum is divided into a number of smaller sub-bands and each user is given its own sub-band to access the communications link. Alternatively, in TDMA systems, each user is given the entire frequency spectrum during periodically recurring time slots. In CDMA systems, each user is given the entire frequency spectrum for all of the time but distinguishes its transmission through the use of a code.

In multi-access communications systems, techniques to reduce mutual interference between multiple users are often utilized to increase user capacity. By way of example, power control techniques can be employed to limit the transmission power of each user to that necessary to achieve a desired quality of service. This approach ensures that each user transmits only the minimum power necessary, but no higher, thereby making the smallest possible contribution to the total noise seen by other users. These power control techniques may become more complex in multi-access communications systems supporting users with multiple channel capability. In addition to limiting the transmission power of the user, the allocated power should be balanced between the multiple channels in a way that optimizes performance.

A power control system can be employed to reduce mutual interference between the multiple subscriber stations 106. The power control system can be used to limit the transmission power over both the forward and reverse links to achieve a desired quality of service. For the purposes of illustration, the gain computation techniques will be described with reference to the reverse link, however, as those skilled in the art will readily appreciate, these gain computation techniques are equally applicable to the forward link.

The reverse link transmission power is typically controlled with two power control loops. The first power control loop is an open control loop. The open control loop is designed to control the reverse link transmission power as a function of path. loss, the effect of base station 160 loading, and environmentally induced phenomena such as fast fading and shadowing. This open control loop estimation process is well known in CDMA communications systems.

The second power control loop is a closed control loop. The closed control loop has the function of correcting the open loop estimate to achieve a desired signal-to-noise ratio (SNR) at the base station 160. This can be achieved by measuring the reverse link transmission power at the base station 160 and providing feedback to the subscriber station 106 to adjust the reverse link transmission power. The feedback signal can be in the form of a reverse power control (RPC) command which is generated by comparing the measured reverse link transmission power at the base station 160 with a power control set point. If the measured reverse link transmission power is below the set point, then an RPC up command is provided to the subscriber station 106 to increase the reverse link transmission power. If the measured reverse link transmission power is above the set point, then an RPC down command is provided to the subscriber station 106 to decrease the reverse link transmission power.

The open and closed control loops may be used to control the transmission power of various reverse link channel structures. By way of example, in some CDMA communications systems, the reverse link waveform includes a traffic channel to carry voice and data services to the base station 160 and a pilot channel used by the base station 160 for coherent demodulation of the voice and data. In these systems, the open and closed control loops can be used to control the reverse link power of the pilot channel. In order to optimize performance, the power of the pilot channel can then be balanced with the power of the traffic channel. Specifically, each channel can be spread with a unique orthogonal code generated by using Walsh functions. A gain can then be applied to the traffic channel in order to maintain an optimal traffic to pilot channel power ratio.

This principle can be extended to additional channels in the reverse link waveform. In CDMA communications systems with a variable data rate, for example, a data rate control (DRC) channel containing a DRC message is generally supported by the reverse link transmission. In the variable data rate mode, the data rate of the forward link transmission is dictated by the DRC message. The DRC message is typically based on a carrier-to-interference (C/I) estimation performed at the subscriber station 106. This approach provides a mechanism for the base station 160 to efficiently transmit the forward link data at the highest possible rate. An exemplary CDMA communications system supporting a variable data rate request scheme is a high data rate (HDR) communications system. The HDR communications system is typically designed to conform one or more standards such as the "cdma2000 High Rate Packet Data Air Interface Specification," 3GPP2 C.S0024, Version 2, Oct. 27, 2000, promulgated by a consortium called "3rd Generation Partnership Project."

Open and closed control loops may be used to control the transmission power of various reverse link channel structures. For example, U.S. Patent No. 6,594,501, entitled "Systems and Techniques for Channel Gain Computations," discloses throttling or backing off predetermined power ratios of the data rate control channels (DRC) and the acknowledgement (ACK) channels with respect to the pilot channel if the total reverse link transmission power exceeds the maximum power capability of the transmitter. US Patent Application Publication No. 2005/0147022 relates to a preamble transmit power tailoring system and method.

## SUMMARY OF THE INVENTION

In view of the above, the described features of the present invention generally relate to one or more improved systems, methods and/or apparatuses for communication speech. According to the present invention, an access terminal according to claim 1 and a method of throttling power over a reverse link according to claim 15 are provided.

According to the invention there is provided an access terminal, comprising a processing unit, a memory operably connected to the processing unit, a receive circuitry operably connected to the processing unit, a transmit circuitry having a power amplifier (PA) used in both single carrier and multi-carrier operations, wherein said transmit circuitry is operably connected to the processing unit, and a throttle control unit operably connected to the power amplifier, wherein said processing unit is adapted to execute instructions stored in said memory to: determine if the power amplifier headroom is sufficient by: summing a pilot channel power level, an overhead channel power level and a traffic channel power level over all assigned carriers, and determining if the sum is less than or equal to, or exceeds a maximum allowed transmit power for the power amplifier; and if the power amplifier headroom is not sufficient,throttle power by reducing transmit power of one or more channels in accordance with power throttling rules until the sum is less than or equal to the maximum allowed transmit power for the power amplifier to provide sufficient headroom for the power amplifier; wherein said instructions to throttle power to provide sufficient headroom for said power amplifier further comprises instructions to throttle power over a reverse link having multiple carriers, comprising: throttle power of at least one secondary reverse link carrier; and throttle power of a primary reverse link carrier; wherein the at least one secondary reverse link carrier and the primary reverse link carrier are throttled in the order secondary and then primary.

In one embodiment, the throttle control unit is further adapted to throttle power over a reverse link having multiple carriers, comprising the steps of throttling the power of one primary RL carrier and throttling the power of at least one secondary RL carrier, wherein the step of throttling power of a primary RL carrier comprises the steps of throttling power for a data source control channel down to default level, throttling power for at least one data rate control channel, throttling power for at least one acknowledgment channel, and throttling one or more of pilot, data, or reverse rate indicator channel powers and wherein the step of throttling power of at least one secondary reverse link carrier comprises throttling one or more of pilot, data, or reverse rate indicator channel powers on a first secondary carrier, throttling one or more of the data, or reverse rate indicator channel powers on a second secondary carrier, throttling power for at least one data rate control channel on the second secondary carrier, throttling power for at least one acknowledgement channel on the second secondary carrier; and throttling power for at least one pilot channel on the second secondary carrier.

BRIEF DESCRIPTION OF THE DRAWINGS

FIG. IA is a diagram of a cellular communication system;
FIG. IB is a simplified functional block diagram of an exemplary subscriber station adapted for operation in a CDMA communications system;
FIG. 2 is one example of a communication system supporting high data rate (HDR) transmissions and adapted for scheduling transmissions to multiple users;
FIG. 3 is a functional block diagram of an exemplary subscriber station adapted for operation in a CDMA communication system;
FIG. 4 is a functional block diagram of an exemplary transmitter gain control and transmitter from the subscriber station of FIG. IB;
FIG. 5 is a flow chart illustrating a back off method implemented by the transmitter gain control of FIG. 4;
FIG. 6 is a flow chart illustrating an alternative back off method implemented by the transmitter gain control of FIG. 4;*rety11374*
FIG. 7 illustrates an access terminal (AT) according to the present patent application;
FIG. 8 is a flowchart disclosing steps executed to reduce the transmit powers input to a power amplifier where the number of assigned reverse link (RL) equals 1;
FIG. 9 is a flowchart disclosing steps executed to reduce the transmit powers input to a power amplifier;
FIG. 10 is a flowchart disclosing steps executed to reduce the transmit powers input to a power amplifier if in asymmetric mode, the reverse link has a single carrier and the forward link has multi-carriers and the PA headroom is not sufficient;
FIG. 11 is a flowchart disclosing steps executed to reduce the transmit powers input to a power amplifier where the number of assigned reverse link RL carriers is greater than 1;
FIG. 12 is a flowchart disclosing steps executed to reduce the transmit powers input to a power amplifier if transmitting DRC and ACK channels on some secondary reverse link carrier and the PA headroom is not sufficient;
FIG. 13 is a flowchart disclosing steps executed to reduce the transmit powers input to a power amplifier if transmitting all DRC and ACK channels on primary reverse link carrier and the PA headroom is not sufficient;
FIG. 14 is a flowchart disclosing steps executed to reduce the transmit powers input to a power amplifier where the number of assigned reverse link RL carriers is greater than 1 and $TxT2P \leq TxT2Pmin$ for all RL carriers;
FIG. 15 is a flowchart disclosing steps executed to reduce the transmit powers input to a power amplifier if transmitting DRC and ACK channels on some secondary reverse link carrier and the PA headroom is not sufficient;
FIG. 16 is a flowchart disclosing steps executed to reduce the transmit powers input to a power amplifier if transmitting DRC and ACK channels on some secondary reverse link carrier and the PA headroom is not sufficient;
FIG. 17 is a flowchart disclosing steps executed to reduce the transmit powers input to a power amplifier if transmitting all DRC and ACK channels on primary reverse link carrier and the PA headroom is not sufficient;

FIG. 18 is an example of a WCDMA protocol structure known in the art;

FIG. 19 is a functional block diagram illustrating the means for reducing the transmit powers input to a power amplifier where the number of assigned reverse link (RL) equals 1;

FIG. 20 is a functional block diagram illustrating the means for reducing the transmit powers input to a power amplifier;

FIG. 21 is a functional block diagram illustrating the means for reducing the transmit powers input to a power amplifier if in asymmetric mode, the reverse link has a single carrier and the forward link has multi-carriers and the PA headroom is not sufficient;

FIG. 22 is a functional block diagram illustrating the means for reducing the transmit powers input to a power amplifier where the number of assigned reverse link RL carriers is greater than 1;

FIG. 23 is a functional block diagram illustrating the means for reducing the transmit powers input to a power amplifier if transmitting DRC and ACK channels on some secondary reverse link carrier and the PA headroom is not sufficient;

FIG. 24 is a functional block diagram illustrating the means for reducing the transmit powers input to a power amplifier if transmitting all DRC and ACK channels on primary reverse link carrier and the PA headroom is not sufficient;

FIG. 25 is a functional block diagram illustrating the means for reducing the transmit powers input to a power amplifier where the number of assigned reverse link RL carriers is greater than 1 and $TxT2P \leq TxT2Pmin$ for all RL carriers;

FIG. 26 is a functional block diagram illustrating the means for reducing the transmit powers input to a power amplifier if transmitting DRC and ACK channels on some secondary reverse link carrier and the PA headroom is not sufficient;

FIG. 27 is a functional block diagram illustrating the means for reducing the transmit powers input to a power amplifier if transmitting DRC and ACK channels on some secondary reverse link carrier and the PA headroom is not sufficient; and

FIG. 28 is a functional block diagram illustrating the means for reducing the transmit powers input to a power amplifier if transmitting all DRC and ACK channels on primary reverse link carrier and the PA headroom is not sufficient.

## DETAILED DESCRIPTION

The detailed description set forth below in connection with the appended drawings is intended as a description of exemplary embodiments of the present invention and is not intended to represent the only embodiments in which the present invention can be practiced. The term "exemplary" used throughout this description means "serving as an example, instance, or illustration," and should not necessarily be construed as preferred or advantageous over other embodiments. The detailed description includes specific details for the purpose of providing a thorough understanding of the present invention. However, it will be apparent to those skilled in the art that the present invention may be practiced without these specific details. In some instances, well known structures and devices are shown in block diagram form in order to avoid obscuring the concepts of the present invention.

In an exemplary embodiment of a communications system, a power control system may be used to increase the number of users that may be supported by the system. For those users with multi-channel capability, gain computation techniques may be employed to balance the relative transmission power between the channels. The gain computations may be performed through a power estimation process which controls the transmission power for one or more channels. In the event that the total transmission power exceeds the power limitations of the user, a systematic back off procedure may be used to reduce the gain of one or more channels.

Various aspects of these gain computation techniques will be described in the context of a CDMA communications system, however, those skilled in the art will appreciate that the techniques for gain computation of multiple channels are likewise suitable for use in various other communications environments. Accordingly, any reference to a CDMA communications system is intended only to illustrate the inventive aspects of the present invention, with the understanding that such inventive aspects have a wide range of applications.

CDMA is a modulation and multiple access scheme based on spread-spectrum communications. In a CDMA communications system, a large number of signals share the same frequency spectrum and, as a result, provide an increase in user capacity. This is achieved by transmitting each signal with a different pseudo-random noise (PN) code that modulates a carrier, and thereby, spreads the spectrum of the signal waveform. The transmitted signals are separated in the receiver by a correlator that uses a corresponding PN code to despread the desired signal's spectrum. The undesired signals, whose PN codes do not match, are not despread in bandwidth and contribute only to noise.

For data transmissions, the AN 120 receives a data request from the AT 106. The data request specifies the data rate at which the data is to be sent, the length of the data packet transmitted, and the sector from which the data is to be sent. The AT 106 determines the data rate based on the quality of the channel between the AN 120 and the AT 106. In one embodiment the quality of the channel is determined by the Carrier-to-Interference ratio, C/I. Alternate embodiments may use other metrics corresponding to the quality of the channel. The AT 106 provides requests for data transmissions by sending a data rate control message via a specific channel referred to as the DRC channel. The DRC message includes a data rate portion and a sector portion. The data rate portion indicates the requested data rate for the AN 120 to send the data, and the sector indicates the sector from which the AN 120 is to send the data. Both data rate and sector information are typically required to process a data transmission. The data rate portion is referred to as a DRC value, and the sector portion is referred to as a DRC cover. The DRC value is a message sent to the AN 120 via the air interface. In one embodiment, each DRC value corresponds to a data rate in kbits/sec having an associated packet length according to a predetermined DRC value assignment. The assignment includes a DRC value specifying a null data rate. In practice, the null data rate indicates to the AN 120 that the AT 106 is not able to receive data. In one situation, for example, the quality of the channel is insufficient for the AT 106 to receive data accurately.

In operation, the AT 106 may continuously monitor the quality of the channel to calculate a data rate at which the AT 126 is able to receive a next data packet transmission. The AT 106 then generates a corresponding DRC value; the DRC value is transmitted to the AN 120 to request a data transmission. Note that typically data transmissions are partitioned into packets. The time required to transmit a packet of data is a function of the data rate applied.

This DRC signal also provides the information, which the channel scheduler 132 (see below) uses to determine the instantaneous rate for consuming information (or receiving transmitted data) for each of the remote stations 106 associated with each queue. According to an embodiment, a DRC signal transmitted from any remote station 106 indicates that the remote station 106 is capable of receiving data at any one of multiple effective data rates.

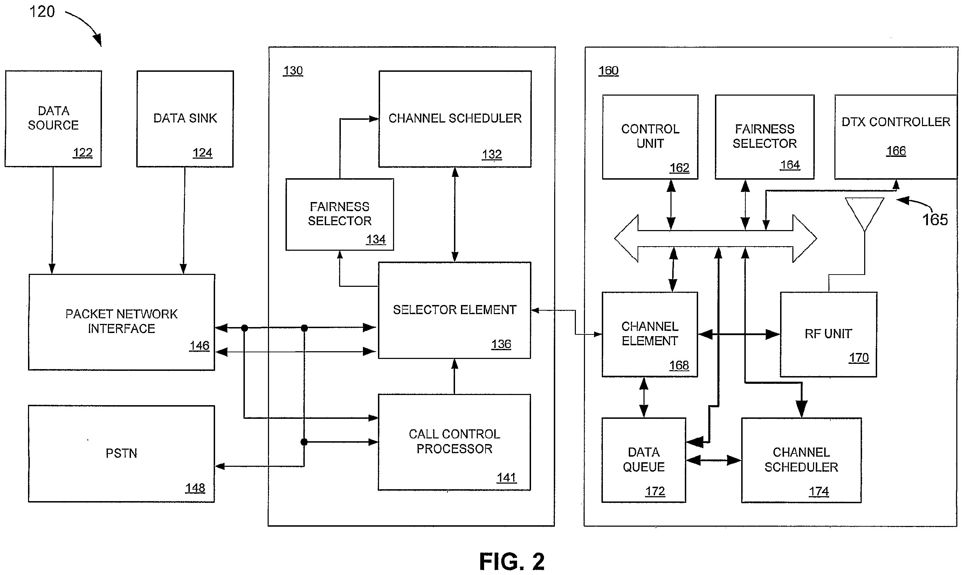

One example of a communication system 100 supporting HDR transmissions and adapted for scheduling transmissions to multiple users is illustrated in FIG. 2. FIG. 2 is detailed hereinbelow, wherein specifically, a base station 160 and base station controller 130 interface with a packet network interface 146. Base station controller 130 includes a channel scheduler 132 for implementing a scheduling algorithm for transmissions in communication system 100. The channel scheduler 132 determines the length of a service interval during which data is to be transmitted to any particular remote station 106 based upon the remote station's 106 associated instantaneous rate for receiving data (as indicated in the most recently received DRC signal). The service interval may not be contiguous in time but may occur once every n slots. According to one embodiment, the first portion of a packet is transmitted during a first slot at a first time and the second portion is transmitted 4 slots later at a subsequent time. Also, any subsequent portions of the packet are transmitted in multiple slots having a similar 4 slot spread, i.e., 4 slots apart from each other. According to an embodiment, the instantaneous rate of receiving data $R_i$ determines the service interval length $L_i$ associated with a particular data queue.

In addition, the channel scheduler 132 selects the particular data queue 172 for transmission. The associated quantity of data to be transmitted is then retrieved from a data queue 172 and provided to the channel element 168 for transmission to the remote station 106 associated with the data queue 172. As discussed below, the channel scheduler 132 selects the queue 172 for providing the data, which is transmitted in a following service interval using information including the weight associated with each of the queues 172. The weight associated with the transmitted queue 172 is then updated.

Base station controller 130 interfaces with packet network interface 146, public switched telephone network (PSTN), 148, and all base stations 160 in the communication system 100 (only one base station 160 is shown in FIG. 2 for simplicity). Base station controller 130 coordinates the communication between remote stations 106 in the communication system 100 and other users connected to packet network interface 146 and PSTN 148. PSTN 148 interfaces with users through a standard telephone network (not shown in FIG. 2).

Base station controller 130 contains many selector elements 136, although only one is shown in FIG. 2 for simplicity. Each selector element 136 is assigned to control communication between one or more base stations 160 and one remote station 106 (not shown). If selector element 136 has not been assigned to a given remote station 106, call control processor 141 is informed of the need to page the remote station 106. Call control processor 141 then directs base station 160 to page the remote station 106.

Data source 122 contains a quantity of data, which is to be transmitted to a given remote station 106. Data source 122 provides the data to packet network interface 146. Packet network interface 146 receives the data and routes the data to the selector element 136. Selector element 136 then transmits the data to each base station 160 in communication with the target remote station 106. In the exemplary embodiment, each base station 160 maintains a data queue 172, which stores the data to be transmitted to the remote station 106.

The data is transmitted in data packets from data queue 172 to channel element 168. In the exemplary embodiment, on the forward link, a "data packet" refers to a quantity of data which is a maximum of 1024 bits and a quantity of data to be transmitted to a destination remote station 106 within a predetermined "time slot" (such as ≈ 1.667 msec). For each data packet, channel element 168 inserts the necessary control fields. In the exemplary embodiment, channel element 168 performs a cyclic redundancy check (CRC) encoding of the data packet and control fields and inserts a set of code tail bits. The data packet, control fields, CRC parity bits, and code tail bits comprise a formatted packet. In the exemplary embodiment, channel element 168 then encodes the formatted packet and interleaves (or reorders) the symbols within the encoded packet. In the exemplary embodiment, the interleaved packet is covered with a Walsh code, and spread with the short PNI and PNQ codes. The spread data is provided to RF unit 170 which quadrature modulates, filters, and amplifies the signal. The forward link signal is transmitted over the air through an antenna 165 to the forward link.

At the remote station 106, the forward link signal is received by an antenna and routed to a receiver 408. The receiver 408 filters, amplifies, quadrature demodulates, and quantizes the signal. The digitized signal is provided to a demodulator (DEMOD) 256 where it is despread with the short PNI and PNQ codes and decovered with the Walsh cover. The demodulated data is provided to a decoder 258 which performs the inverse of the signal processing functions done at base station 160, specifically the deinterleaving, decoding, and CRC check functions. The decoded data is provided to a data sink.

The hardware, as pointed out above, supports variable rate transmissions of data, messaging, voice, video, and other communications over the forward link. The rate of data transmitted from the data queue 172 varies to accommodate changes in signal strength and the noise environment at the remote station 106. Each of the remote stations 106 preferably transmits a DRC signal to an associated base station 160 at each time slot. The DRC signal provides information to the base station 160, which includes the identity of the remote station 106 and the rate at which the remote station 106 is to receive data from its associated data queue 172. Accordingly, circuitry at the remote station 106 measures the signal strength and estimates the noise environment at the remote station 106 to determine the rate information to be transmitted in the DRC signal.

The DRC signal transmitted by each remote station 106 travels through a reverse link channel and is received at base station 160 through a receive antenna 165 coupled to RF unit 170. In the exemplary embodiment, the DRC information is demodulated in channel element 168 and provided to a channel scheduler 174 located in the base station controller 130 or to a channel scheduler 132 located in the base station 160. In a first exemplary embodiment, the channel scheduler 174 is located in the base station 160. In an alternate embodiment, the channel scheduler 132 is located in the base station controller 130, and connects to all selector elements 136 within the base station controller 130.

In these HDR communications systems 100, the power of the pilot channel can also be balanced with the power of the DRC and ACK channels. This process involves spreading each of the DRC and ACK channels with a unique orthogonal code generated by using Walsh functions. A DRC gain can then be applied to the DRC channel to maintain an optimal DRC to pilot channel power ratio. Similarly, an ACK gain can also be applied to the ACK channel to maintain an optimal ACK to pilot channel power ratio.

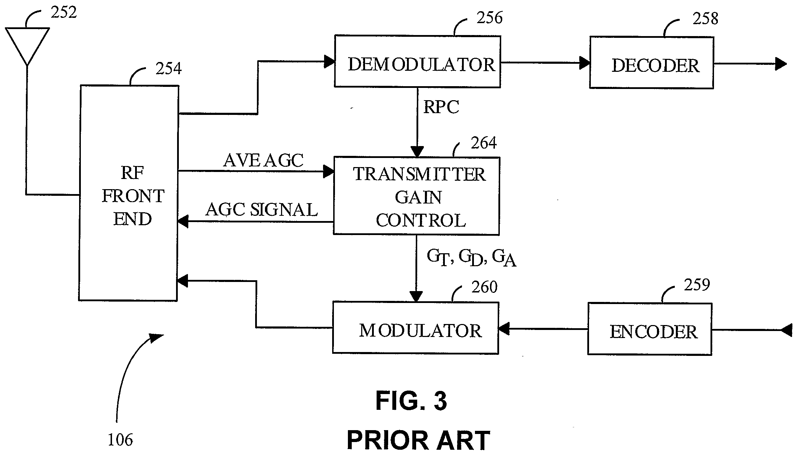

A functional block diagram of an exemplary subscriber station 106 operating in a HDR communications system 100 is shown in FIG. 3. The exemplary subscriber station 106 includes a receiver and a transmitter both coupled to an antenna 252. The receiver includes an RF front end 254, a demodulator 256 and a decoder 258. The transmitter includes an encoder 259, a modulator 260, and shares the RF front end 254 with the receiver. The transmitter also includes a transmitter gain control 264 to control the reverse link transmission power in a manner to be discussed in greater detail later.

The RF front end 254 is coupled to the antenna 252. The receiver portion of the front end 254 downconverts, filters, amplifies and digitizes a signal received by the antenna 252. The receiver portion of the RF front end 254 also includes an AGC (not shown) to maximize the dynamic range of the digitized signal. The AGC can be utilized by the transmitter gain control 264 to compute the path loss between the base station 160 and the subscriber station 106 during the open loop power control estimation. The digitized signal from the receiver portion of the RF front end 254 can then be coupled to the demodulator 256 where it is quadrature demodulated with short PN codes, decovered by Walsh codes, and descrambled using a long PN code. The demodulated signal can then be provided to the decoder 258 for forward error correction. The demodulator 256 can also be used to extract the RPC command from the reverse link transmission and provide it to the transmitter gain control 264 for closed loop power control computations.

The transmitter includes the encoder 259 which typically provides convolution coding and interleaving of the reverse link traffic channel. The encoded traffic channel is provided to the modulator 260 where it is spread with a Walsh cover and amplified by a traffic channel gain ($G_T$) computed by the transmitter gain control 264. The pilot channel, DRC channel, and ACK channel are also provided to the modulator 260 where they are each spread with a different Walsh cover and amplified by respective channel gains ($G_P$), ($G_D$), and ($G_A$) computed by the transmitter gain control 264. The channels are then combined, spread with a long PN code and quadrature modulated with short PN codes. The quadrature modulated signal is provided to the transmitter portion of the RF front end 254 where it is upconverted, filtered, and amplified for over the air forward link transmission through the antenna 252. The amplification of the quadrature modulated signal in the transmitter portion of the RF front end 254 is controlled by an AGC signal from the transmitter gain control 264.

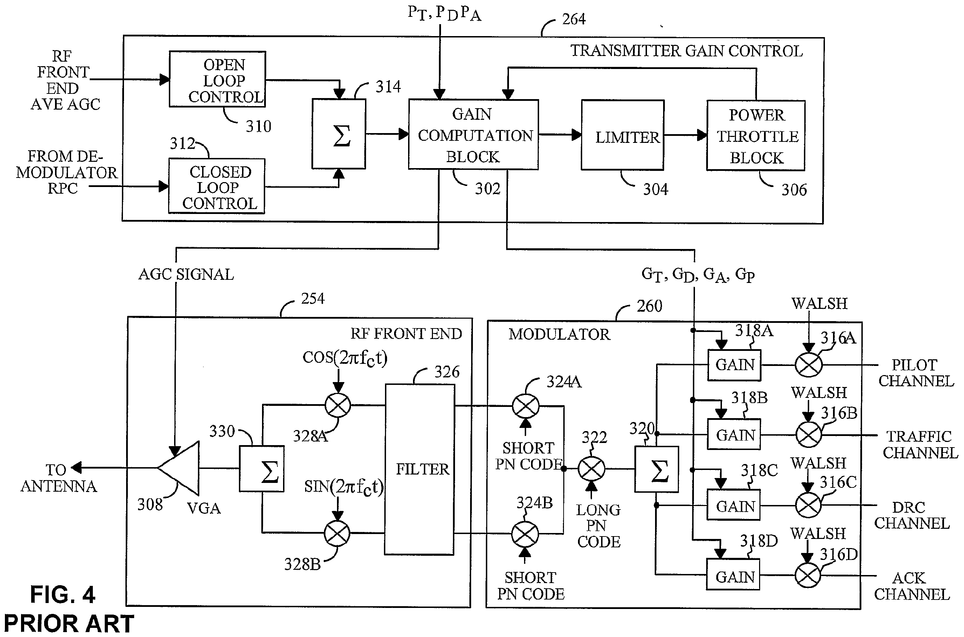

A functional block diagram of an exemplary transmitter gain control 264, modulator 260 and transmitter portion of the RF front end 254 is shown in FIG. 4. The transmitter gain control 264 includes a power and gain computation block 302 for computing the gains for the pilot, traffic, DRC, and ACK channels. The gain computations are based on predetermined power ratios for the traffic, DRC and ACK channels with respect to the pilot channel. A feedback loop can be used to reduce the channel gains under power limiting conditions by "throttling" or "backing off" the predetermined power ratios for the DRC and ACK channels. The feedback loop includes a limiter 304 and a power throttle block 306. The limiter 304 determines whether the total reverse link transmission power resulting from the predetermined power ratios exceeds the maximum power capability of the transmitter. The maximum power capability of the transmitter is limited by a variable gain amplifier (VGA) 308 and a power amplifier (not shown) in the RF front end 254. In the described exemplary embodiment, the power and gain computation block 302 also computes the total reverse link transmission power based on the predetermined power ratios and the estimated reverse link power for the pilot channel. If the resultant total reverse link transmission power exceeds the power capability of the transmitter, the power throttle block 306 is used to back off the power ratios for the DRC and ACK channels in a manner to be described in greater detail later.

The transmitter gain control 264 can be implemented with a variety of technologies including, by way of example, embedded communications software. The embedded communications software can be run on a programmable digital signal processor (DSP). Alternatively, the transmitter gain control 264 can be implemented with a general purpose processor running a software program, an application specific integrated circuit (ASIC), a field programmable gate array (FPGA) or other programmable logic device, discrete gate or transistor logic, discrete hardware components, or any combination thereof.

In the described exemplary embodiment, the power ratios for the traffic, DRC and ACK channels with respect to the pilot channel can be used to compute the channel gains. Accordingly, computational complexity can be reduced if the appropriate power ratios are first determined using the feedback loop before the gain computations are made. As explained above, the feedback loop is used to "throttle" or "back off" the predetermined power ratios of the DRC and ACK channels with respect to the pilot channel if the total reverse link transmission power exceeds the maximum power capability of the transmitter. The total reverse link transmission power can be computed by solving the following equation:

$$\text{Total Power} = \text{Pilot Channel Power} + 10 \log_{10} (1 + P_T + \beta_D \cdot P_D + \beta_A \cdot P_A) \tag{1}$$

where:

$P_T$ is the traffic to pilot channel power ratio;
$P_D$ is the DRC to pilot channel power ratio;
$\beta_D$ is a value used to back off the DRC power ratio;
$P_A$ is the ACK to pilot channel power ratio; and
$\beta_A$ is a value used to back off the ACK power ratio.

The "Pilot Channel Power" is estimated by two power control loops. An open control loop 310 generates an estimate of the required transmission power on the pilot channel based on the average value of the AGC from the receiver. The open loop estimate can then be computed by means well known in the art for nominal base station 160 loading and effective radiated power (ERP). Information about variations from the nominal base station 160 loading and ERP can be communicated from the base station 160 to the subscriber station 106 and used to adjust the open loop estimate by means well known in the art.

A closed control loop 312 can be used to increment or decrement the current closed loop estimate based on the RPC commands recovered from the demodulator 256. The resultant closed loop estimate is summed with the open loop estimate by a summer 314. The sum of the open and closed loop estimates yields the total reverse link power for the pilot channel. This sum is provided to the power and gain computation block 302 where it is used as the "Pilot Channel Power" in equation (1).

The traffic to pilot channel power ratio $P_T$ can be computed in a variety of fashions. In at least one embodiment, the traffic to pilot channel power ratio can be predetermined for each data rate supported by the reverse link transmission either by empirical analysis, simulation, experimentation, or any other means to achieve a desired quality of service. By way of example, in at least one simulation it has been shown that for a 9.6 k data rate, the traffic to pilot channel ratio may be between -2.25 db and 9 dB. If the data rate is increased to 38.4 k, the traffic to pilot channel power ratio should be between 3.75 dB and 15 dB. Those skilled in the art will readily be able to determine the appropriate traffic to pilot channel power ratio values for all data rates supported by their particular application. These predetermined power ratio values can be stored at the base station 160 and transmitted to each subscriber station 106 in its respective cell or sector over a forward link control channel. Alternatively, the predetermined power ratio values can be stored or computed at the subscriber station 106.

The DRC to pilot channel power ratio $P_D$ and the ACK to pilot channel ratio $P_A$ can also be computed in a variety of fashions. Similar to the traffic to pilot channel power ratio, the DRC and ACK power ratios can be predetermined either by empirical analysis, simulation, experimentation, or any other means to achieve a desired quality of service. In at least one embodiment of the exemplary HDR communications system, the DRC to pilot channel power ratio can take on values between -9 dB and 6 dB in 1 dB increments and the ACK to pilot channel power ratio can take on values between -3 dB and 6 dB also in 1 dB increments. These predetermined power ratio values can be stored at the base station 160 and transmitted to each subscriber station 106 in its respective cell or sector over the control channel. Alternatively, the predetermined power ratio values can be stored or computed at the subscriber station 106.

To compute the total reverse link transmission power from equation (1), the channel power ratio values can be converted into the linear domain as follows:

$$P_T = 10^{(\text{Traffic Power Ratio Value}/10)} \tag{2}$$

$$P_D = 10^{(\text{DRC Power Ratio Value}/10)} \tag{3}$$

$$P_A = 10^{(\text{ACK Power Ratio Value}/10)} \tag{4}.$$

The power throttle block 306 is used to reduce the power ratios for the DRC and ACK channels under power limiting conditions. The power throttle block 306 can accomplish this by generating values $\beta_D$ and $\beta_A$ and feeding them back to the power and gain computation block 302 for scaling the DRC and ACK power ratios, respectively. The DRC and ACK values can be expressed in the linear domain respectively as:

$$\beta_D = 10^{(-\text{DRCbackoff}/10)} \tag{5}$$

$$\beta_A = 10^{(-\text{ACKbackoff}/10)} \tag{6}.$$

From the above equations, one skilled in the art will readily appreciate that a 1 dB reduction in the DRC to pilot channel power ratio can be achieved by setting "DRCbackoff" in equation (5) to 1. A 2 dB reduction in the ACK to pilot channel power ratio can be achieved by setting "ACKbackoff" in equation (6) to 2. Thus, any incremental reduction scheme can be implemented depending on the particular design parameters and the specific communications application.

In the described exemplary embodiment, the "Total Power" in equation (1) is initially computed by the power and gain computation block 302 with the values $\beta_D$ and $\beta_A$ set to 1 so that the power ratios for each channel are set to their predetermined optimal or desired values. The computed "Total Power" is provided to the limiter 304. The limiter 304 compares the computed "Total Power" to the maximum power capability of the transmitter. If the computed "Total Power" exceeds the power limitations of the transmitter, then the reverse link data rate can be lowered to reduce the total reverse link transmission power. In response to the reduced data rate, the power and gain computation block 302 selects a new predetermined traffic to pilot channel power ratio corresponding to the reduced data rate. The "Total Power" can then be recomputed by the power and gain computation block 302 and provided to the limiter 304 for comparison with the maximum power capability of the transmitter. This procedure continues until the computed "Total Power" comes within the power capability of the transmitter or the reverse link data rate is reduced to the lowest data rate supported by the communications system 120.

In the event that the "Total Power" computed by the power and gain computation block 302 exceeds the maximum power capability of the transmitter at the lowest data rate supported by the communications system, the limiter 304 can be used to ratchet the closed control loop 312 such that RPC up commands are ignored. This can be achieved by holding the current closed loop estimate constant in response to an RPC up command and reducing the current closed loop estimate in response to an RPC down command. In some embodiments, ratcheting can be supported at both ends of the transmitter power level such that RPC down commands are ignored if the reverse link transmission power is below a minimum operating threshold.

The limiter 304 also enables the power throttle block 306 to implement a "back off" algorithm to adjust the values $\beta_D$ and $\beta_A$ to systematically reduce the power ratios for one or both of the DRC and ACK channels until the "Total Power" computed by the power and gain computation block is within the maximum power capability of the transmitter. The manner in which the values $\beta_D$ and $\beta_A$ are reduced and the resultant incremental reduction in the power ratios of the channels may vary depending on the system application and the overall design constraints.

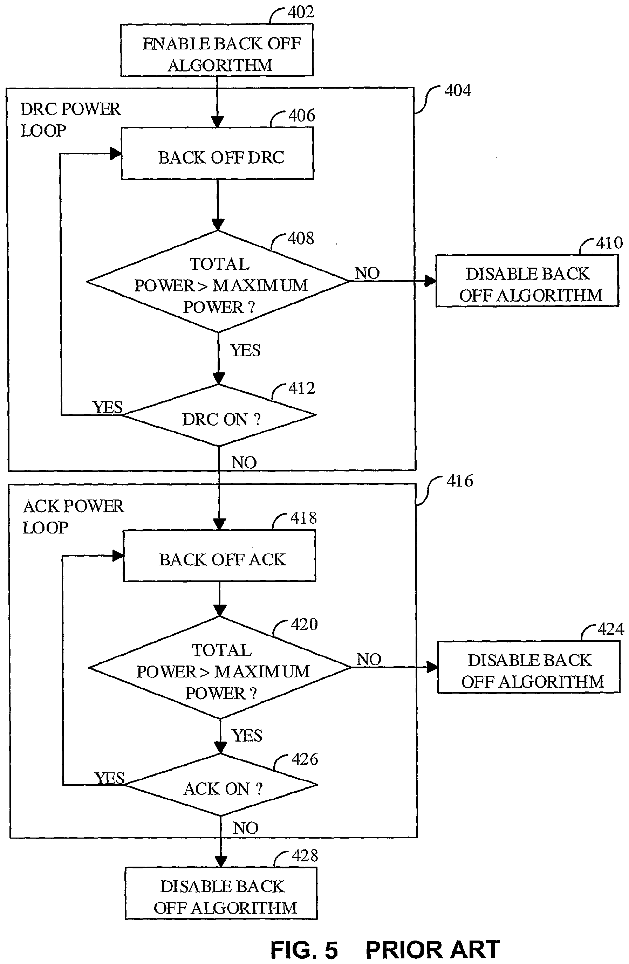

A flow chart illustrating an exemplary back off method is shown in FIG. 5. Initially, the limiter is used to enable the back off algorithm in step 402. Once the back off method is enabled, a DRC power loop 404 is entered into. In the DRC power loop 404, the DRC to pilot channel power ratio can backed off by 1 dB in step 406. This can be achieved by recomputing the DRC value $\beta_D$ with the "DRCbackoff" in equation (5) at 1. Alternatively, the "DRCbackoff" in equation (5) can be set to any value to achieve a desired reduction in the DRC to pilot channel power ratio. In any event, the recomputed DRC value $\beta_D$ can be fed back to the to the power and gain computation block 302. The "Total Power" can then be recomputed and provided to the limiter 304 to determine whether the total reverse link transmission power is within the maximum power capability of the transmitter.

In step 408, the results from the limiter 304 are provided to the gain throttle block. If the recomputed "Total Power" is within the maximum power capability of the transmitter, the power throttle block 306 is disabled in step 410. Conversely, if the recomputed "Total Power" still exceeds the maximum power capability of the transmitter, then the power throttle block 306 determines whether the DRC channel remains in the "on" state in step 412. The DRC channel is determined to be in the "on" state it the DRC $\beta_D$ is greater than 0, or some other minimum threshold value. If the DRC channel remains in the "on" state, then the method loops back to step 406 and reduces the DRC to pilot channel power ratio another dB by setting the "DRCbackoff" in equation (5) to 2 which will result in a 2 dB reduction in the DRC to pilot channel ratio. The back off method remains in the DRC power loop 404 until either the power throttle block 306 is disabled in step 410 or the DRC value $\beta_D$ is reduced below the minimum threshold. Should the DRC value $\beta_D$ be reduced below the minimum threshold, then the back off algorithm exits the DRC power gain loop 404 and enters an ACK power loop 416.

In the ACK power loop 416, the ACK to pilot channel power ratio can backed off by 1 dB in step 418. This can be achieved by recomputing the ACK value $\beta_A$ with the "ACKbackoff" in equation (6) at 1. Alternatively, the "ACKbackoff" in equation (6) can be set to any value to achieve a desired reduction in the ACK to pilot channel power ratio. In any event, the recomputed ACK value $\beta_A$ can be fed back to the to the power and gain computation block. The "Total Power" can then be recomputed and provided to the limiter 304 to determine whether the total reverse link transmission power is within the maximum power capability of the transmitter.

In step 420, the results from the limiter 304 are provided to the gain throttle block. If the recomputed "Total Power" is within the maximum power capability of the transmitter, the power throttle block 306 is disabled in step 424. Conversely, if the recomputed "Total Power" still exceeds the maximum power capability of the transmitter, then the power throttle block 306 determines whether the ACK channel remains in the "on" state. The ACK channel is determined to be in the "on" state if the ACK value $\beta_A$ is greater than 0, or some other minimum threshold value. If the ACK channel remains in the "on" state, then the method loops back to step 418 and reduces the ACK to pilot channel power ratio another dB by setting the "ACKbackoff" in equation (6) to 2 which will result in a 2 dB reduction in the ACK to pilot channel ratio. The back off method remains in the ACK power loop 416 until either the power throttle block 306 is disabled by the limiter 304 in step 424 or the ACK value $\beta_A$ is reduced below the minimum threshold. Should the ACK value $\beta_A$ be reduced below the minimum threshold, then the back off algorithm is disabled by exiting the ACK power loop in step 424. In that event, other power reduction techniques can be employed to bring the total reverse link transmission power within the maximum power capability of the transmitter.

The exemplary embodiment of the back off method described in connection with FIG. 5 may be computationally intensive depending on the predetermined power ratios for the DRC and ACK channels. By way of example, if the predetermined power ratios for the DRC and ACK channels are each set to the 6 dB maximum, there is a possibility that 16 passes through the DRC power loop 404 and 10 passes through the ACK power loop 416 might be required to back off the DRC and ACK power ratios. To reduce the potential computational complexity, an alternative back off method may be implemented that computes the DRC value $\beta_D$ in a single step, and if necessary, computes the ACK value $\beta_A$ in a single step. This can be achieved in a variety of ways. By way of example, equation (1) can be manipulated to solve for the value of interest by defining a total power to pilot channel power ratio and setting it to a value relating to the maximum power capability of the transmitter. This can be achieved by rewriting equation (1) in the linear domain as:

$$R = 1 + P_T + P_D + P_A \tag{7}$$

$$R_M \geq 1 + P_T + \beta_D \cdot P_D + \beta_A \cdot P_A \tag{8}$$

where R represents the total power to pilot channel power ratio before enabling the back off method, and $R_M$ is the maximum allowed value of R after computing the values $\beta_D$ and $\beta_A$.

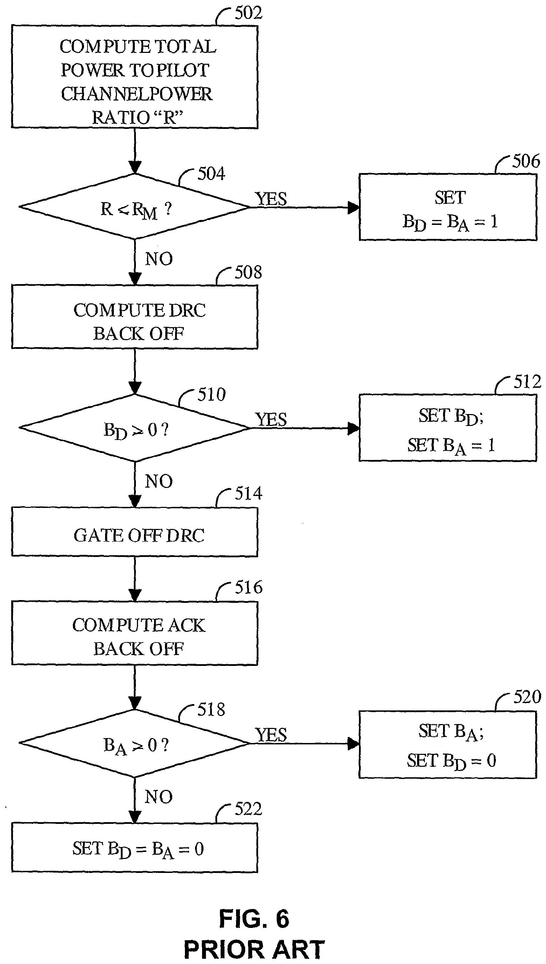

A flow chart illustrating an exemplary method utilizing equations (7) and (8) is shown in FIG. 6. In step 502, the total power to pilot channel power ratio R is computed. The computed power ratio is then compared to the maximum allowable total power to pilot channel power ratio $R_M$ in step 504. If $R \leq R_M$, then the DRC and ACK power ratios do not require back off. In that event, the values $\beta_D$ and $\beta_A$ are set to 1 by the power throttle block 306 and fed back to the power and gain computation block 302 in step 506. Conversely, if R is greater than $R_M$, the DRC value $\beta_D$ can then be computed in step 508.

The DRC value $\beta_D$ can be computed by setting the ACK value $\beta_A$ to 1 and solving for the DRC value $\beta_D$ in equation (8). With the ACK value $\beta_A$ set to 1, equation (8) can be rewritten as:

$$\beta_D = (R_M - 1 - P_T - P_A)/P_D \tag{9}.$$

In step 510, the resultant DRC value computation is examined to determine whether it is positive. If $\beta_D \geq 0$, then the computed DRC value $\beta_D$ will reduce the DRC to pilot channel power ratio to a level that will result in a "Total Power" computation within the maximum power capability of the transmitter. In that event, the ACK value $\beta_A$ is set to 1 and fed back along with the computed DRC value $\beta_D$ to the power and gain computation block 302 in step 512. Conversely, if the DRC value $\beta_D$ is negative, then the DRC channel is gated off by setting the DRC value $\beta_D$ to 0 in step 514.

Once the DRC channel is gated off, the ACK valve $\beta_A$ value can be computed in step 516. The ACK value $\beta_A$ can be computed by setting the DRC value $\beta_D$ to 0 and solving for the ACK value $\beta_A$ in equation (8). With the DRC value $\beta_D$ set to 0, equation (8) can be rewritten as:

$$\beta_A = (R_M - 1 - P_T)/P_A \tag{10}.$$

In step 518, the resultant ACK value computation is examined to determine whether it is positive. If $\beta_A \geq 0$, then the computed ACK value $\beta_A$ will reduce the ACK to pilot channel power ratio to a level that will result in a "Total Power" computation by the power and gain computation block 302 within the maximum power capability of the transmitter. In that event, the DRC value $\beta_D$ is set to 0 and fed back along with the computed ACK value $\beta_A$ to the power and gain computation block 302 in step 520. Conversely, if the ACK value $\beta_A$ is negative, then the ACK channel is gated off by setting the ACK value $\beta_A$ to 0 in step 522.

Regardless of the back off method implemented by the power throttle block 306, the power and gain computation block 302 will compute the gains for the traffic, DRC, ACK and pilot channels once the limiter 304 determines that the total reverse link transmission power is within the maximum power capability of the transmitter. Since the gains will be applied to their respective channels in the digital domain, it is advantageous to scale the gains to prevent an increase in the number of bits as the gain adjusted channels are added together in the modulator 260. This can be accomplished by setting the gains such that the sum of their squares equals 1 as follows:

$$G_P^2 + G_T^2 + G_D^2 + G_A^2 = 1 \tag{11}.$$

Equation (11) can be resolved as follows for each channel gain:

$$G_P = 1 / \sqrt{1 + P_T + \beta_D \cdot P_D + \beta_A \cdot P_A} \tag{12}$$

$$G_T = \sqrt{P_T} / \sqrt{1 + P_T + \beta_D \cdot P_D + \beta_A \cdot P_A} \tag{13}$$

$$G_D = \sqrt{\beta_D \cdot P_D} / \sqrt{1 + P_T + \beta_D \cdot P_D + \beta_A \cdot P_A} \tag{14}$$

$$G_A = \sqrt{\beta_A \cdot P_A} / \sqrt{1 + P_T + \beta_D \cdot P_D + \beta_A \cdot P_A} \tag{15}.$$

Referring back to FIG. 4, the channel gains computed by the power and gain computation block 302 can be coupled to the modulator 260. The modulator 260 includes a mixer 316B which is used to spread the encoded traffic channel from the encoder 259 with a Walsh function. The pilot, DRC and ACK channels are also provided to mixers 316A, 316C, and 316D, respectively, where they are each spread with a different Walsh cover. The Walsh covered traffic, pilot, DRC and ACK channels are provided to gain elements 318A-D, respectively, where their respective gains computed by the power and gain computation block 302 are applied. The outputs of the gain elements 318A-D are provided to a summer 320 where they are combined with the pilot channel. The combined channels are then coupled to a mixer 322 where they are spread using the long PN code. The spread channels are then split into a complex signal having an in-phase (I) component and a quadrature phase (Q) component. The complex signal is quadrature modulated with the short PN codes by mixers 324A and 324B before being output to the transmitter portion of the RF front end 254.

A complex baseband filter 326 is positioned at the input to the RF front end 254 to reject out of band components of the quadrature modulated signal. The filtered complex signal is provided to quadrature mixers 328A and 328B where it is modulated onto a carrier waveform before being combined by a summer 330. The combined signal is then provided to the VGA 308 to control the power of the reverse link transmission through the antenna. An AGC signal from the power and gain computation block 302 is used to set the gain of the of the VGA 308. The AGC signal is based on the "Total Power" computed by the power and gain computation block 302 from equation (1).

Transmission scheduling in a circuit-switched system may involve a proportional fair algorithm, wherein a priority function is defined for each user. An example of a proportional fair algorithm is presented hereinbelow. The priority function may take into consideration the requested data rate for a given user, typically a function of forward link channel quality to the user, and the throughput for the user. Capacity is thus balanced by first serving those users having high requested data rates compared to throughput.

Transmission scheduling in a packet-switched system, according to one embodiment, balances capacity with user delay. Application flows are transmitted as datagrams, which are independent, self-contained messages sent over a network. The datagram arrival, arrival time, and content are not generally guaranteed. Datagrams associated with a same application flow may be transmitted by different routes to a same user. The datagrams are reassembled at the receiver.

The cases presented in the present discussion include: i) multi-carrier reverse link; and ii) multi-carrier forward link and single carrier reverse link, referred to as asymmetric mode. This patent application presents RL power throttling rules for the following embodiments: i) single carrier RL; and ii) multi-carrier RL embodiments. There is a need to throttle power on the reverse link so as to conserve resources and reduce interference with other communications, such as from other remote stations 106 to the base station 160, etc. In one embodiment, throttling is used to indicate decreasing power to meet power amplifier (PA) 308 constraints. In a multi-carrier system, the AN 120 sends a Traffic Channel Assignment message to the AT 106 indicating which is the primary carrier and which are the secondary carriers.

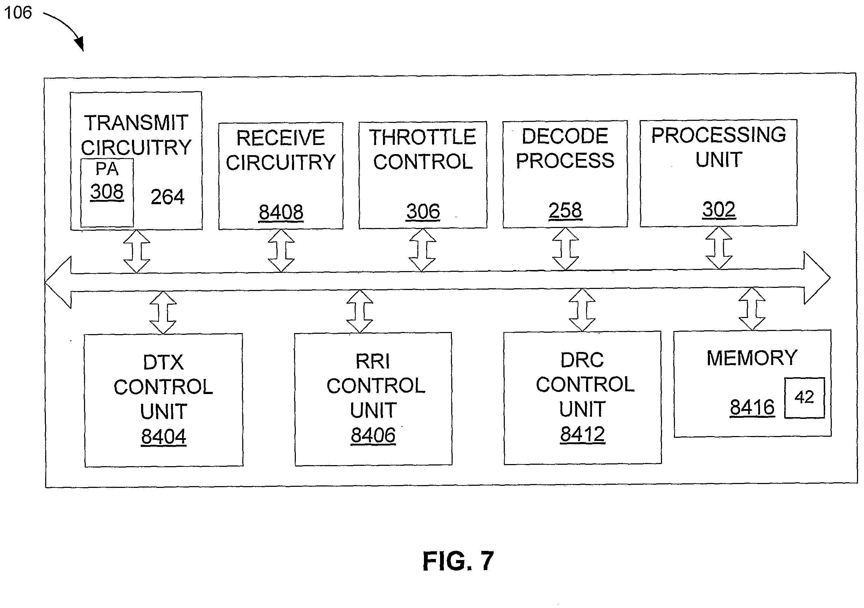

In one embodiment, shown in FIG. 7, a handset is the AT 106. A power amp (PA) 308 located in the transmit circuitry 264 of AT 106 can become saturated if too much RF power is input. The input RF power to the PA 308 may be reduced to allow enough headroom to prevent the PA 308 from saturating during operation.

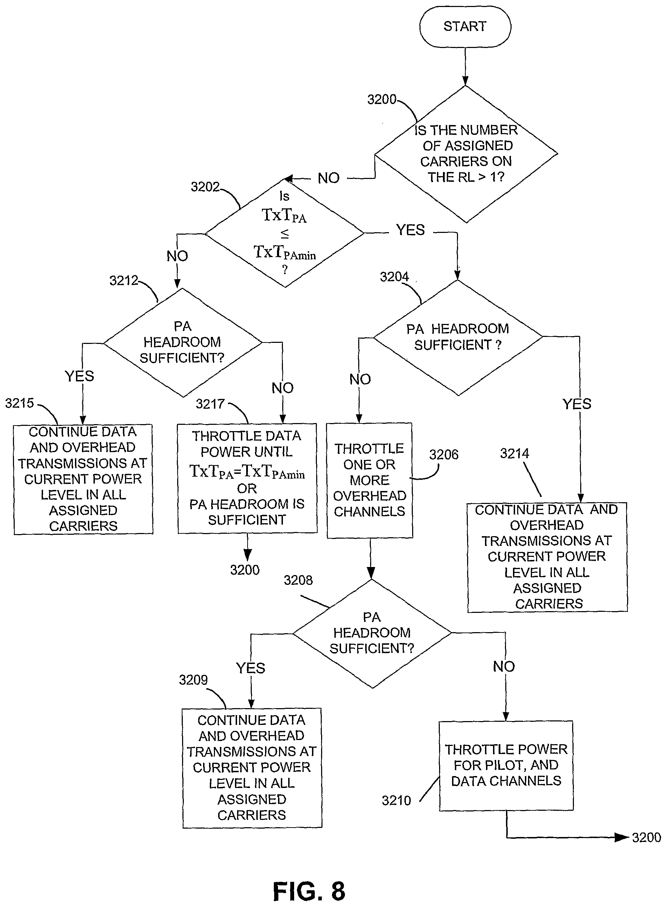

In one embodiment, the secondary carrier powers are throttled (e.g., RF transmit power is reduced) to allow headroom for the primary carrier. In this case, the pilot, overhead and traffic channel RF power levels are summed over all assigned reverse link carriers for that AT 106. The sum is kept less than or equal to the maximum allowed transmit power for the PA 308. If the sum total of the transmit powers input to the PA 308 exceeds the maximum rated power of the PA 308 residing in the AT 106, the method of reducing power disclosed in FIGs. 8-17 may be implemented across the various channels in each assigned carrier. If there is still not enough headroom, the primary carrier power is also throttled.

The different embodiments include i) multi-carrier FL link with a multi-carrier RL, and ii) multi-carrier FL with a single carrier RL (asymmetric mode). The RL power throttling rules include single carrier and multi-carrier rules. As will be shown below, the different carriers, secondary and then primary, and the different channels on each carrier may be throttled in the order or sequence disclosed in the following paragraphs. The reason for following the sequences listed below when throttling power is that some carriers or channels may be considered of a lower value and may be throttled before another carrier or channel. For example, an acknowledge (ACK) may be considered of a high value because it is transmitted in one-half slot. On the other hand, data rate control (DRC) is transmitted for several slots so it may be less valuable. Thus, DRC may be throttled before ACK. However, since DRC may determine serving sector and rate, performance above a threshold may be useful. Data source control (DSC) determines the serving cell so performance above a threshold is also useful.

## Single Carrier RL Throttle Rules

For the single carrier RL power throttle rules (step 3200), if i) the transmit power level of the AT ($TxT_{PA}$) is less than or equal to the minimum transmit power level for that AT ($TXT_{PAmin}$), i.e., $TxT_{PA} \leq TxT_{PAmin}$ (step 3202) and ii) the AT 106 is PA headroom limited (step 3204), the power is throttled in the following order: i) one or more overhead channels (step 3206), ii) the Pilot and the Data channels (Step 3210). FIG. 8 illustrates the steps executed in this embodiment.

## FIG. 8

Step 3200, is the number of assigned carriers on the RL > 1? If the answer is no, then execute step 3202, is $TxT_{AT} \leq TxT_{minAT}$? If the answer to step 3202 is yes, then execute step 3204, is the PA headroom sufficient? If the answer to step 3204 is yes, then execute step 3214, continue data and overhead transmissions at current power levels in all assigned carriers.

If the answer to step 3204 is no, then execute step 3206, throttle one or more overhead channels. Then execute step 3208, is PA headroom sufficient? If the answer to step 3208 is yes, then execute step 3209, continue data and overhead transmissions at current power levels for all channels on the RL carrier which correspond to all assigned carriers. If the answer to step 3208 is no, then execute step 3210, throttle the power for the pilot and data channels on the RL which carry information for all carriers on the FL. Return to step 3200.

If the answer to step 3202 is no, then execute step 3212, is the PA headroom sufficient? If the answer to step 3212 is yes, then execute step 3215, continue data and overhead transmissions at current power levels in all assigned carriers. If the answer to step 3212 is no, then execute step 3217, throttle data channel power on the RL until $TxT_{AT}$ = $TxT_{minAT}$ or PA Headroom is sufficient. Return to Step 3200.

In one embodiment, for the single carrier RL power throttle rules, if i) the transmitted traffic channel to pilot channel transmit power ratio of the AT 106 (TxT2P) is less than or equal to the minimum transmitted traffic channel to pilot channel transmit power ratio for that AT 106 (TxT2Pmin), i.e., $TxT2P \leq TxT2Pmin$ and ii) the AT 106 is PA headroom limited, the power is throttled in the following order: i) DSC, ii) DRC, iii) ACK, iv) Pilot, Data and reverse rate indicator (RRI).

It is noted that the DRC, DSC, ACK, RRI, Pilot and Data (or Traffic) are channels transmitted on the reverse link. The DRC, DSC, ACK, RRI and Pilot are overhead channels. In one embodiment, there is only one DSC on the reverse link which provides information to a base station 160 for one forward link carrier. On the other hand, there may be a plurality of DRC and ACK channels which provide information to a base station 160 for a primary and secondary FL carriers. Also, there will be one RRI and one Pilot channel on a reverse link carrier which provide information to the AT 106. It is also noted that the FL carriers carry traffic (or data) channels and overhead channels such as the ACK channel, the reverse power channel (RPC) and the reverse activity bit (RAB) channel. These overhead channels provide information to the AT 106.

Thus, for N=1 (single carrier RL region of operation, where N represents the number of carriers on the reverse link), asymmetric mode (its asymmetric mode because its multi-carrier FL and single carrier RL) where $TxT2P \leq TxT2Pmin$ on the reverse link carrier and the PA headroom is not sufficient, the RL power is throttled in the following order until sufficient PA 308 headroom is reached: step 1) Throttle the DSC power on the RL down to the default level. If there still is not sufficient PA headroom, then step 2) throttle the DRC power for the DRC's on the reverse link which carry information for all the primary and secondary carriers on the FL until one of two conditions occur: i) there is sufficient PA headroom or ii) the DRC power has been throttled down. If there still is not sufficient PA headroom, then step 3), throttle the ACK power for the ACK channels on the reverse link which carry information for all the primary and secondary carriers on the FL until one of two conditions occur: i) there is sufficient PA headroom or ii) the ACK power has been throttled down. If there still is not sufficient PA headroom, then step 4) throttle one or more of the Pilot, Data, RRI and DSC channels on the RL until there is sufficient headroom.

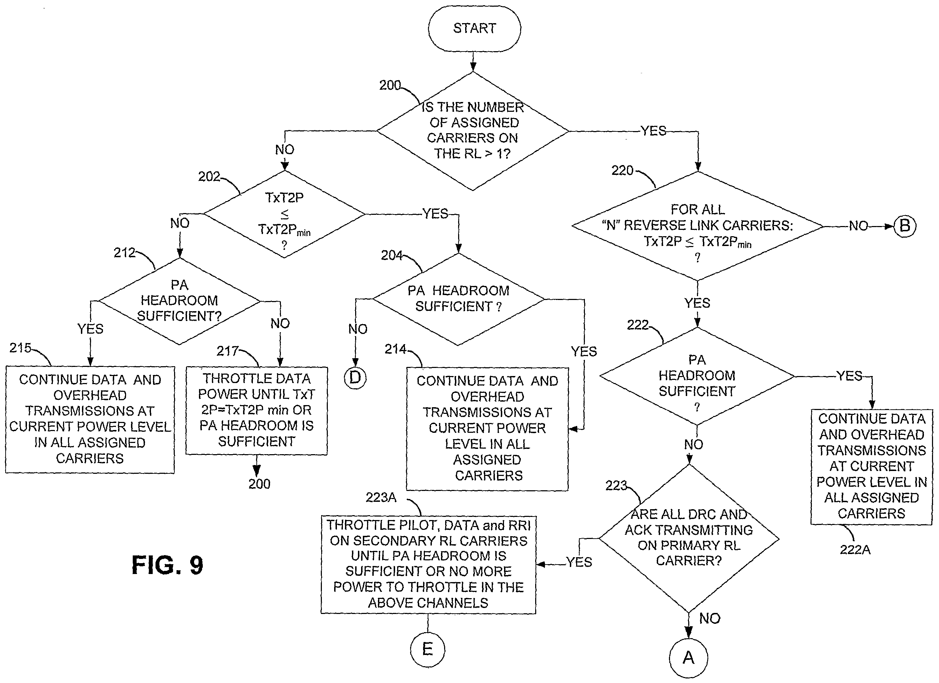

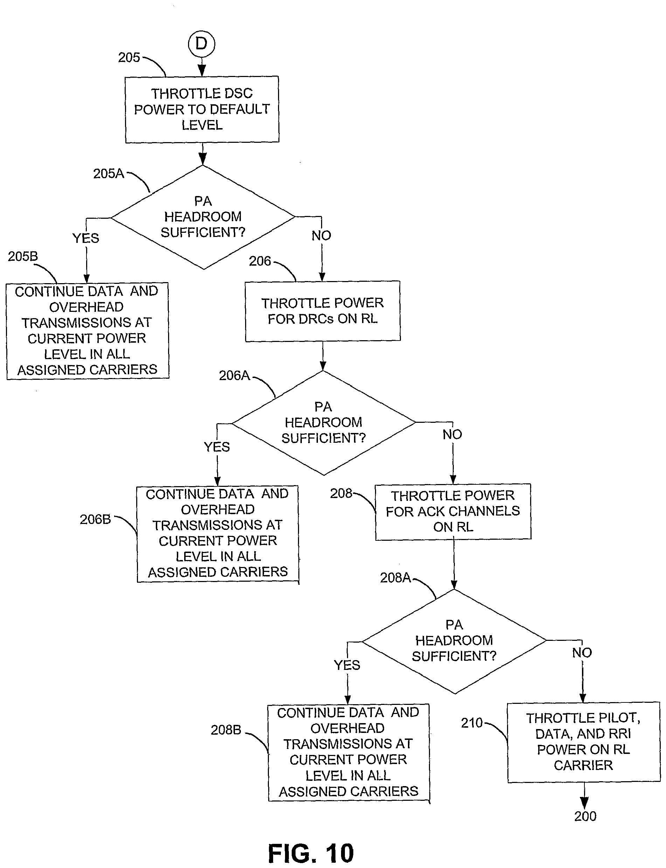

In FIGs. 9 and 10, this method of throttling power corresponds to the following steps:

### FIG. 9

In step 200, is the number of assigned carriers on the RL > 1? If the answer is no, then execute step 202, is $TxT2P \leq TxT2Pmin$? If the answer to step 202 is yes, then execute step 204, is the PA headroom sufficient? If the answer to step 204 is yes, then execute step 214, continue data and overhead transmissions at current power levels in all assigned carriers.

### FIG. 10

If the answer to Step 204 is no, then execute step 205 (shown in FIG. 10), throttle DSC power on RL to default level. Then execute step 205A, is PA headroom sufficient? If the answer to step 205A is yes, then execute step 205B, continue data and overhead transmissions at current power levels for all channels on the RL carrier which correspond to all assigned carriers. If the answer to step 205A is no, then execute step 206, throttle the power for the DRCs on the RL which carry information for all carriers on the FL. After executing step 206, execute step 206A, is PA headroom sufficient? If the answer to step 206A is yes, then execute step 206B, continue data and overhead transmissions at current power levels in all assigned carriers. If the answer to step 206A is no, then execute step 208, throttle the power for the ACK channels on the RL which carry information for all carriers on the FL. After executing step 208, execute step 208A, is PA headroom sufficient? If the answer to step 208A is yes, then execute step 208B, continue data and overhead transmissions at current power levels in all assigned carriers. If the answer to step 208A is no, then execute step 210, throttle the Pilot, Data and RRI channel powers on the RL carrier. Return to step 200.

**FIG. 9**

If the answer to step 202 is no, then execute step 212 (shown in FIG. 9), is the PA headroom sufficient? If the answer to step 212 is yes, then execute step 215, continue data and overhead transmissions at current power levels in all assigned carriers. If the answer to step 212 is no, then execute step 217, throttle data channel power on the RL until TxT2P = TxT2Pmin or PA Headroom is sufficient. Return to Step 200.

**Multicarrier RL Throttle Rules**

The multicarrier throttle rules are applied when $T_XT_{AT} \leq TxT_{minAT}$ on all RL carriers, N, assigned to the access terminal 106 and the access terminal 106 is PA headroom limited.

There are two embodiments for the multi-carrier case (N>1): i) where the AT 106 is transmitting overhead channels on some secondary RL carriers, and ii) where the AT 106 is transmitting all overhead channels on the primary reverse link carrier. For the multi-carrier case (N>1) where the AT 106 is transmitting overhead channels on some secondary RL carriers and where for all "N" RL carriers TxT2P $\leq$ TxT2Pmin and the PA 308 headroom is not sufficient, throttle the RL power in the following order until PA 308 headroom is sufficient:

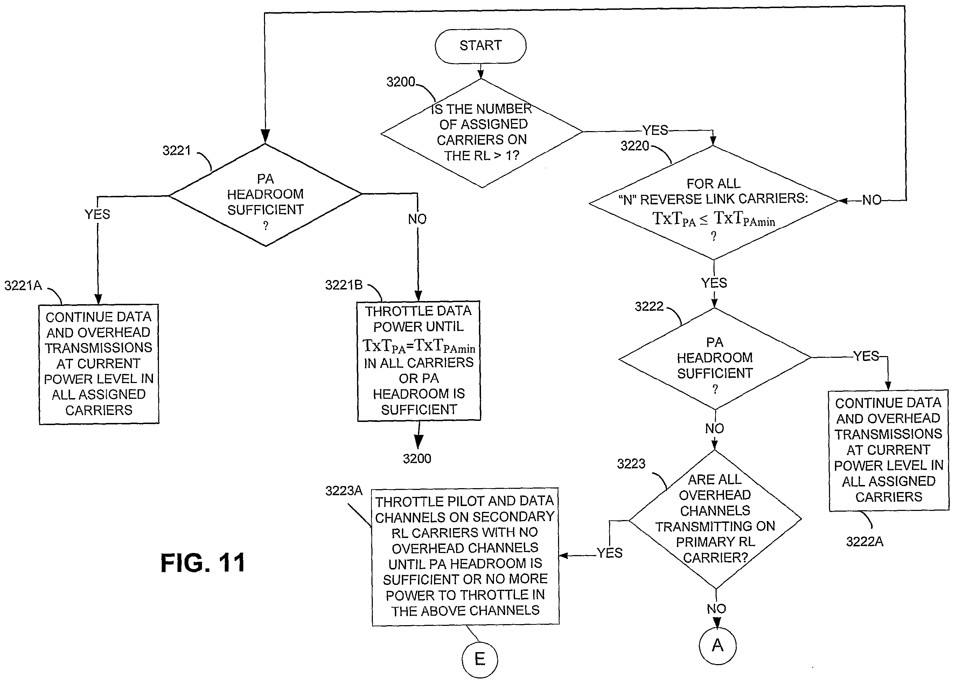

1) For secondary RL carriers (with RL traffic only), throttle Pilot and Data channels on the corresponding RL carrier. 2) For secondary RL carriers (with overhead channels and RL traffic), i) throttle the Data channels on the corresponding RL carrier, ii) throttle one or more overhead channels which carry information for all carriers on the FL, and iii) throttle the Pilot and data source channels on the corresponding RL carrier. (The order of i and ii can be reversed). 3) On the primary RL carrier, i) throttle one or more of the overhead channels which carry information for all carriers on the FL, and ii) throttle the Pilot and Data channels on the primary RL carrier. In FIG. 11, this method of throttling power corresponds to the following steps:

**FIG. 11**

In FIG. 11, execute step 3200, is the number of assigned carriers on the RL > 1? If the answer is yes, then execute step 3220, is TxTp$_A$ $\leq$ TxT$_{PAmin}$ for all RL carriers?

If the answer to step 3220 is no, then execute step 3221, is the PA headroom sufficient? If the answer to step 3221 is yes, then execute step 3221A, continue data and overhead transmissions at current power levels in all assigned carriers. If the answer to step 3221 is no, then execute step 3221B, throttle Data channel power until TxTp$_A$ = TxT$_{PAmin}$ in all carriers or PA headroom is sufficient. Then return to step 3200.

If the answer to step 3220 is yes, then execute step 3222, is the PA headroom sufficient? If the answer to step 3222 is yes, then execute step 3222A, continue data and overhead transmissions at current power levels in all assigned carriers. If the answer to step 3222 is no, then execute step 3223, are all overhead channels transmitting on the primary RL carrier?

**FIG. 12**

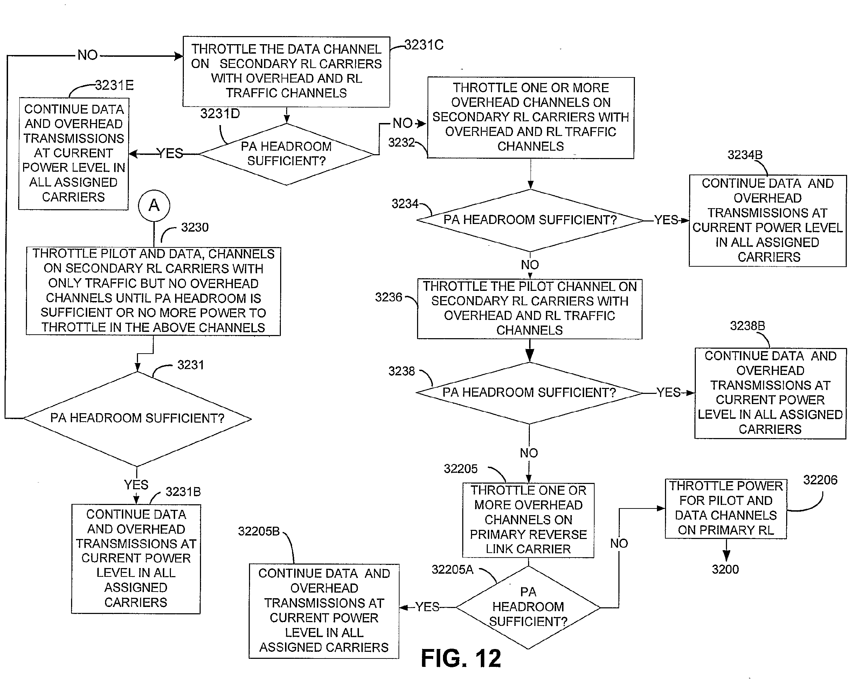

If the answer to step 3223 is no, then execute step 3230 (shown in FIG. 12), throttle the Pilot and Data channels on the secondary RL carriers with only traffic channels, and no overhead channels, until there is sufficient PA headroom or there is no more power to throttle in the Pilot and Data channels.

After executing step 3230, execute step 3231, is PA headroom sufficient? If the answer to step 3231 is yes, then execute step 3231B, continue data and overhead transmissions at current power levels in all assigned carriers. If the answer to step 3231 is no, then execute step 3231C, throttle the Data channel on the secondary RL carriers with overhead and RL traffic channels until there is sufficient PA headroom or there is no more power to throttle in the Data channel. After executing step 3231C, execute step 3231D, is PA headroom sufficient? If the answer is to step 3231D is yes, then execute step 3231E, continue data and overhead transmissions at current power levels in all assigned carriers.

If the answer to step 3231D is no, then execute step 3232, throttle the power for one or more overhead channels for secondary RL carriers with overhead and Traffic channels. After executing step 3232, execute step 3234, is PA headroom sufficient? If the answer to step 3234 is yes, then execute step 3234B, continue data and overhead transmissions at current power levels in all assigned carriers. If the answer to step 3234 is no, then execute step 3236, throttle the power for Pilot channels on secondary RL carriers with overhead and Traffic channels.

After executing step 3236, execute step 3238, is PA headroom sufficient? If the answer to step 3238 is yes, then execute step 3238B, continue data and overhead transmissions at current power levels in all assigned carriers. If the answer to step 3238 is no, then execute step 32205, throttle one or more overhead channels on primary reverse link carrier. Then execute step 32205A, is PA headroom sufficient? If the answer to step 32205A is yes, then execute step 32205B, continue data and overhead transmissions at current power levels in all assigned carriers. If the answer to step 32205A is no, then execute step 32206, throttle the power for Pilot and Data channels on the primary RL carrier. Next, return to step 3200.

For the multi-carrier reverse link case (N>1), if transmitting all overhead channels on primary reverse link carrier and for all "N" reverse link carriers $TxT_{PA} \leq TxT_{PAmin}$ and PA headroom is not sufficient, throttle RL power in the following order until PA headroom is sufficient:

1) For secondary RL carriers, throttle the Pilot and Data channels on corresponding RL carrier. 2) For primary RL carrier, throttle one or more overhead channels. 3) For the primary RL carrier, throttle the Pilot and Data channels.

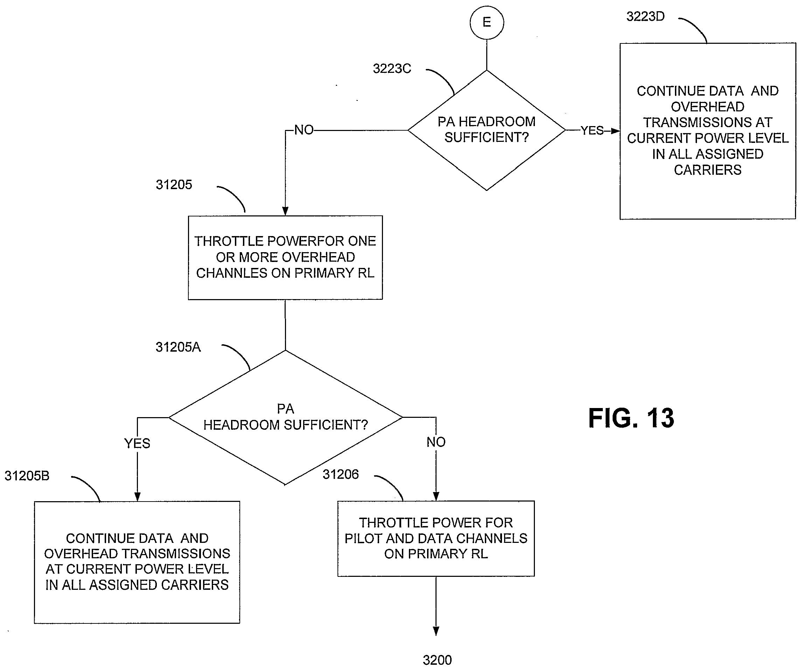

In FIGs. 11 and 13, this method of throttling power corresponds to the following steps:

**FIG. 11**

In FIG. 11, execute step 3200, is the number of assigned carriers on the RL > 1? If yes, then execute step 3220, is $TxT_{PA} \leq TxT_{PAmin}$ for all RL carriers? If the answer to step 3220 is yes, then execute step 3222, is the PA headroom sufficient? If the answer to step 3222 is yes, then execute step 3222A, continue data and overhead transmissions at current power levels in all assigned carriers. If the answer to step 3222 is no, then execute step 3223, are all overhead channels transmitting on the primary RL carrier? If the answer to step 3223 is yes, then execute step 3223A, throttle the Pilot and Data channels on the secondary RL carriers with no overhead channels until there is sufficient PA headroom or there is no more power to throttle in the Pilot and Data channels.

**FIG. 13**

Next, execute step 3223C (shown in FIG. 13), is PA headroom sufficient? If the answer to step 3223C is yes, then execute step 3223D, continue data and overhead transmissions at current power levels in all assigned carriers. If the answer to step 3223C is no, then execute step 31205, throttle the power for one or more overhead channels on the primary RL. After executing step 31205, execute step 31205A, is PA headroom sufficient? If the answer to step 31205A is yes, then execute step 31205B, continue data and overhead transmissions at current power levels in all assigned carriers. If the answer to step 31205A is no, then execute step 31206, throttle the power for Pilot and Data channels on the primary RL. Then, return to step 3200.

In one embodiment, the multicarrier throttle rules are applied when $TxT2P \leq TxT2Pmin$ on all RL carriers, N, assigned to the access terminal 106 and the access terminal 106 is PA headroom limited.

For the multi-carrier case (N>1), where the AT is transmitting DRC and ACK channels on some secondary RL carriers, where for all "N" RL carriers $TxT2P \leq TxT2Pmin$ and the PA headroom 405 is not sufficient, throttle the RL power in the following order until PA headroom 405 is sufficient:

1) For secondary RL carriers (with RL traffic only), throttle the Pilot, Data and RRI channels on the corresponding RL carrier. 2) For secondary RL carriers (with DRC, ACK channel and RL traffic), i) throttle the DSC channel down to default level, ii) throttle the Data and RRI channels on the corresponding RL carrier, iii) throttle the DRCs on the corresponding RL carrier which carry information for all carriers on the FL, iv) throttle the ACK channels on the corresponding RL carrier which carry information for all carriers on the FL, and v) throttle the Pilot and DSC channels on the corresponding RL carrier. (In one embodiment, steps iii and iv can come before step ii). 3) On the primary RL carrier, throttle the DSC channel down to default level, throttle power for the DRC channels on the primary RL carrier which carry information for all carriers on the FL, throttle the power for the ACK channels on the primary RL carrier which carry information for all carriers on the FL, and throttle the Pilot, Data and RRI channels on the primary RL carrier. In FIGs. 9, 15, 14 and 16, this method of throttling power corresponds to the following steps:

**FIG. 9**

In FIG. 9 execute step 200, is the number of assigned carriers on the RL > 1? If the answer is yes, then execute step 220, is $TxT2P \leq TxT2Pmin$ for all RL carriers?

**FIG. 14**

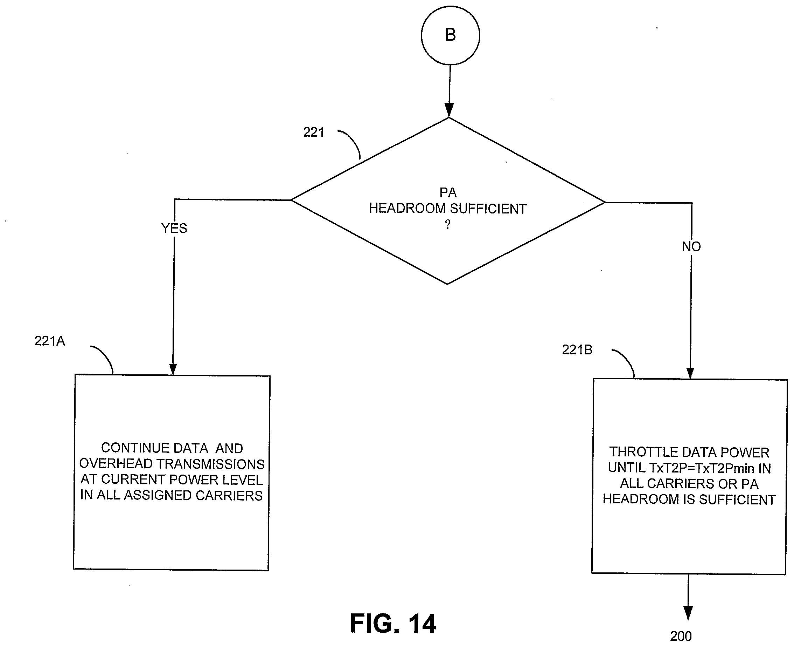

If the answer to Step 220 is no, then execute step 221 (shown in FIG. 14), is the PA headroom sufficient? If the answer to step 221 is yes, then execute step 221A, continue data and overhead transmissions at current power levels in all assigned carriers. If the answer to step 221 is no, then execute step 221B, throttle Data channel power until TxT2P = TxT2Pmin in all carriers or PA headroom is sufficient. Then return to step 200.

**FIG. 9**

If the answer to step 220 is yes, then execute step 222, is the PA headroom sufficient? If the answer to step 222 is yes, then execute step 222A, continue data and overhead transmissions at current power levels in all assigned carriers. If the answer to step 222 is no, then execute step 223, are all DRC and ACK transmitting on the primary RL carrier?

**FIG. 15**

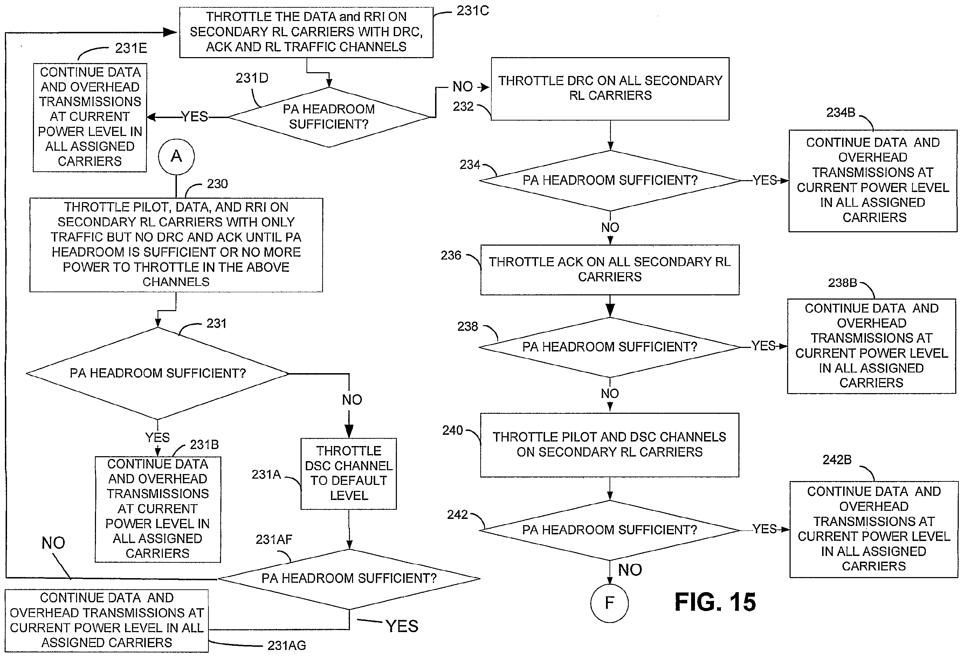

If the answer to step 223 is no, then execute step 230 (shown in FIG. 15), throttle the Pilot, Data and RRI channels on the secondary RL carriers with only traffic channels, but no DRC or ACK channels, until there is sufficient PA headroom or there is no more power to throttle in the Pilot, Data and RRI channels. After executing step 230, execute step 231, is PA headroom sufficient? If the answer to step 231 is yes, then execute step 231B, continue data and overhead transmissions at current power levels in all assigned carriers. If the answer to step 231 is no, then execute step 231A, throttle the DSC channels on corresponding secondary RL carriers down to default level. Next, execute step 231AF, is PA headroom sufficient? If the answer to step 231AF is yes, then execute step 231AG, continue data and overhead transmissions at current power levels in all assigned carriers.

If the answer to step 231AF is no, then execute step 231C, throttle the Data and RRI channels on the secondary RL carriers with DRC, ACK and RL traffic channels, until there is sufficient PA headroom or there is no more power to throttle in the Data and RRI channels. After executing step 231C, execute step 231D, is PA headroom sufficient? If the answer is to step 231D is yes, then execute step 231E, continue data and overhead transmissions at current power levels in all assigned carriers.

If the answer to step 231D is no, then execute step 232, throttle the power for the DRC channels for all secondary RL carriers. After executing step 232, execute step 234, is PA headroom sufficient? If the answer to step 234 is yes, then execute step 234B, continue data and overhead transmissions at current power levels in all assigned carriers. If the answer to step 234 is no, then execute step 236, throttle the power for the ACK channels on all secondary RL carriers. After executing step 236, execute step 238, is PA headroom sufficient? If the answer to step 238 is yes, then execute step 238B, continue data and overhead transmissions at current power levels in all assigned carriers. If the answer to step 238 is no, then execute step 240, throttle the power for the Pilot and DSC channels on corresponding secondary RL carriers. After executing step 240, execute step 242, is PA headroom sufficient? If the answer to step 242 is yes, then execute step 242B, continue data and overhead transmissions at current power levels in all assigned carriers.

**FIG. 16**

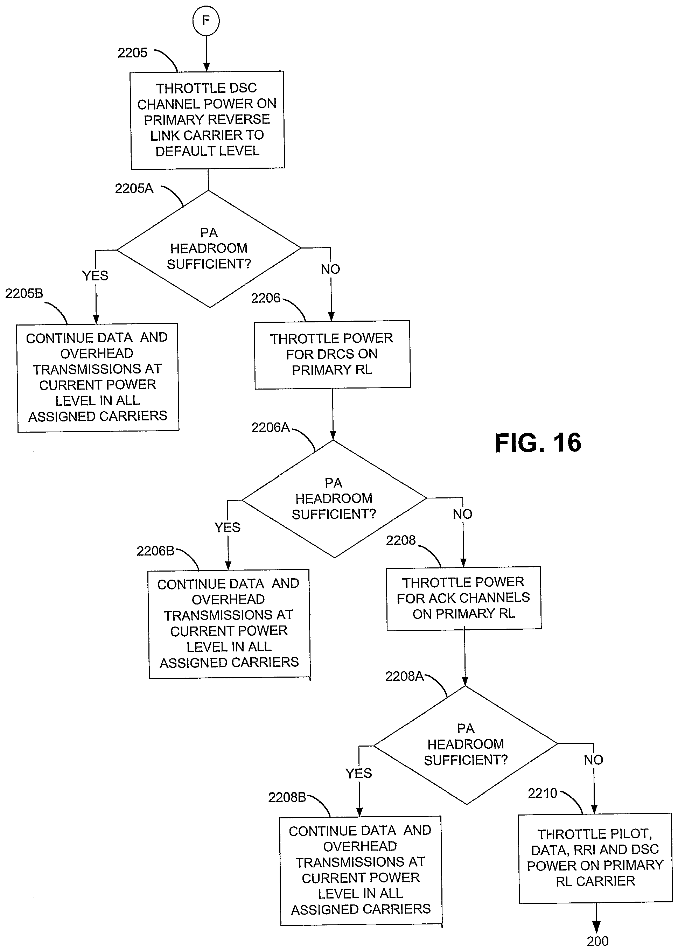

If the answer to step 242 is no, then execute step 2205 (shown in FIG. 16), throttle the DSC channel power on primary reverse link carrier to a default level. Then execute step 2205A, is PA headroom sufficient? If the answer to step 2205A is yes, then execute step 2205B, continue data and overhead transmissions at current power levels in all assigned carriers. If the answer to step 2205A is no, then execute step 2206, throttle the power for DRCs on the primary RL which carry information for all carriers on the FL. After executing step 2206, execute step 2206A, is PA headroom sufficient? If the answer to step 2206A is yes, then execute step 2206B, continue data and overhead transmissions at current power levels in all assigned carriers. If the answer to step 2206A is no, then execute step 2208, throttle the power for the ACK channels on the primary RL which carry information for all carriers on the FL. After executing step 2208, execute step 2208A, is PA headroom sufficient? If the answer to step 2208A is yes, then execute step 2208B, continue data and overhead transmissions at current power levels in all assigned carriers. If the answer to step 2208A is no, then execute step 2210, throttle Pilot, Data, RRI and DSC channel powers on the primary RL carrier. Next, return to step 200.

For the multi-carrier reverse link case (N>1), and if transmitting all DRC and ACK channels on primary reverse link carrier and for all "N" reverse link carriers TxT2P $\leq$ TxT2Pmin and PA headroom is not sufficient, throttle RL power in the following order until PA headroom is sufficient:

1) For secondary RL carriers, throttle the Pilot, Data, and RRI channels on corresponding RL carrier. 2) For primary RL carrier, throttle the DSC down to default level. Throttle the power for DRCs on the primary RL which carry information for all carriers on the FL. Throttle the power for ACK channels on the primary RL carrier which carry information for all carriers on the FL. Throttle the Pilot, Data, RRI and DSC channels on primary RL carrier.

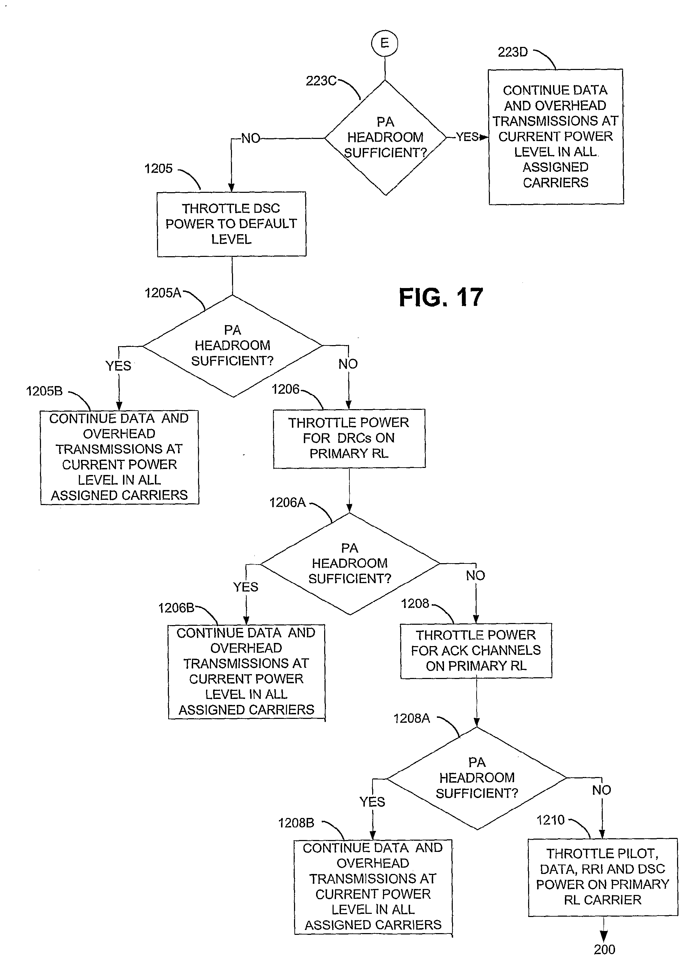

In FIGs. 9 and 17, this method of throttling power corresponds to the following steps:

**FIG. 9**

In FIG. 9, execute step 200, is the number of assigned carriers on the RL > 1? If yes, then execute step 220, is TxT2P ≤ TxT2Pmin for all RL carriers? If the answer to step 220 is yes, then execute step 222, is the PA headroom sufficient? If the answer to step 222 is yes, then execute step 222A, continue data and overhead transmissions at current power levels in all assigned carriers. If the answer to step 222 is no, then execute step 223, are all DRC and ACK transmitting on the primary RL carrier? If the answer to step 223 is yes, then execute step 223A, throttle the Pilot, Data and RRI channels on the secondary RL carriers until there is sufficient PA headroom or there is no more power to throttle in the Pilot, Data and RRI channels.

**FIG. 17**

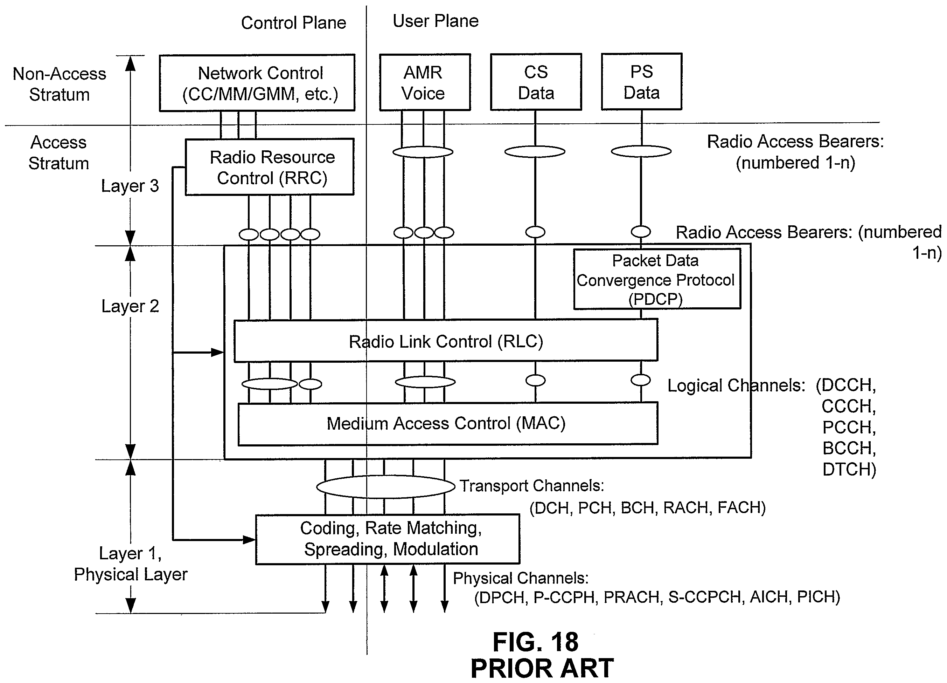

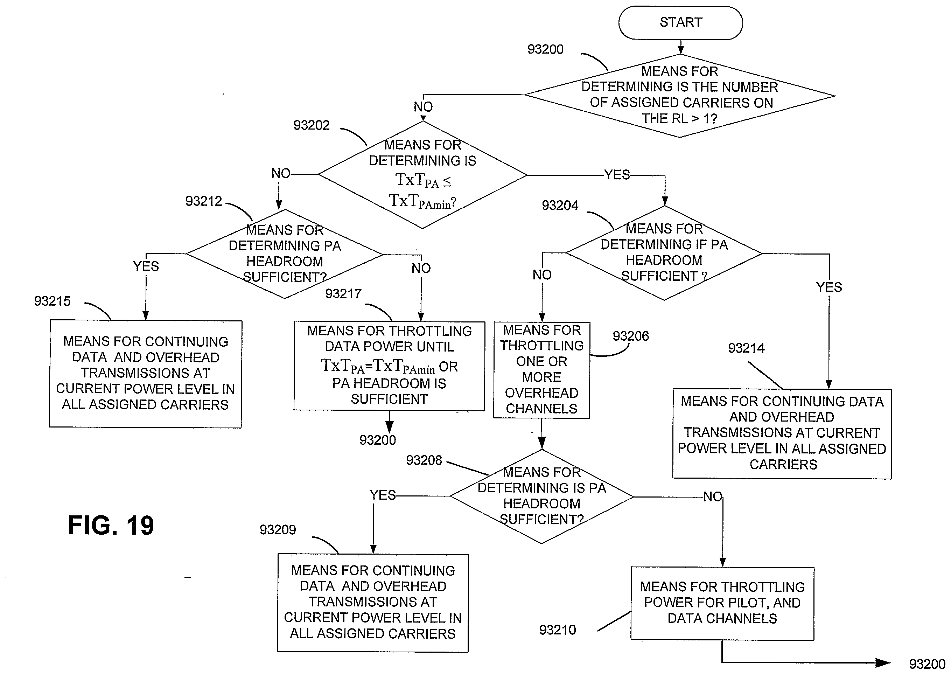

Next, execute step 223C (shown in FIG. 17), is PA headroom sufficient? If the answer to step 223C is yes, then execute step 223D, continue data and overhead transmissions at current power levels in all assigned carriers. If the answer to step 223C is no, then execute step 1205, throttle the DSC power to default level.
Next, execute step 1205A, is PA headroom sufficient? If the answer to step 1205A is yes, then execute step 1205B, continue data and overhead transmissions at current power levels in all assigned carriers. If the answer to step 1205A is no, then execute step 1206, throttle the power for DRCs on the primary RL which carry information for all carriers on the FL. After executing step 1206, execute step 1206A, is PA headroom sufficient? If the answer to step 1206A is yes, then step 1206B, continue data and overhead transmissions at current power levels in all assigned carriers. If the answer to step 1206A is no, then execute step 1208, throttle the power for ACK channels on the primary RL which carry information for all carriers on the FL. After executing step 1208, execute step 1208A, is PA headroom sufficient? If the answer to step 1208A is yes, then execute step 1208B, continue data and overhead transmissions at current power levels in all assigned carriers. If the answer to step 1208A is no, then execute step 1210, throttle the Pilot, Data, RRI and DSC channel powers on the primary RL carrier. Then, return to step 200.

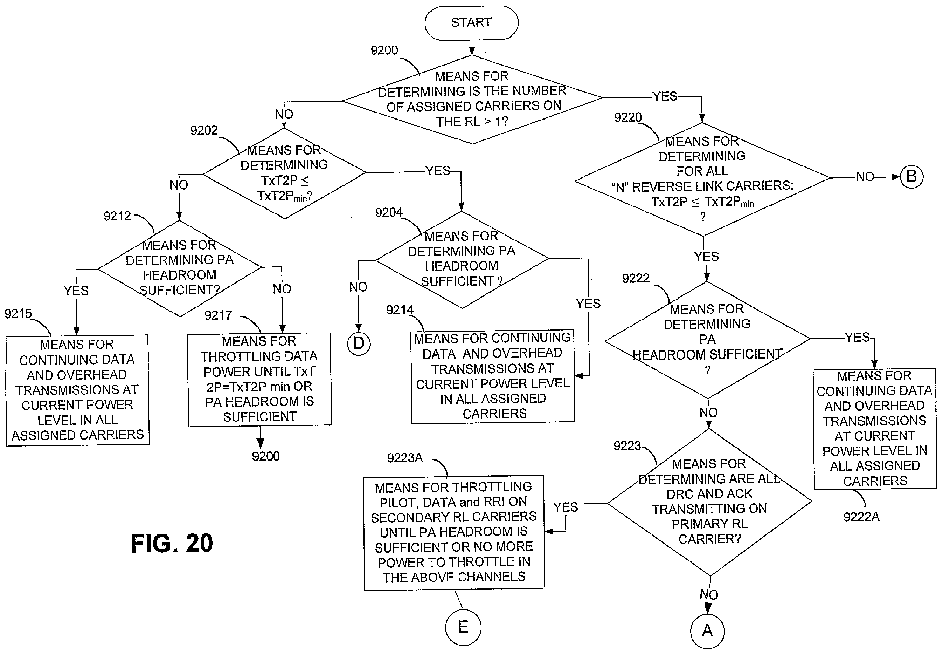

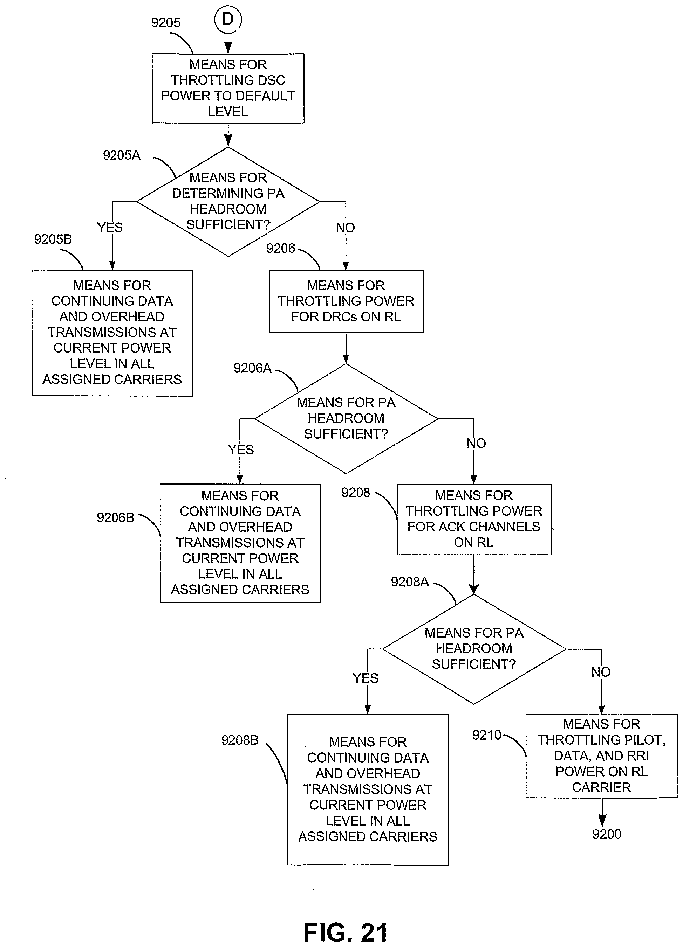

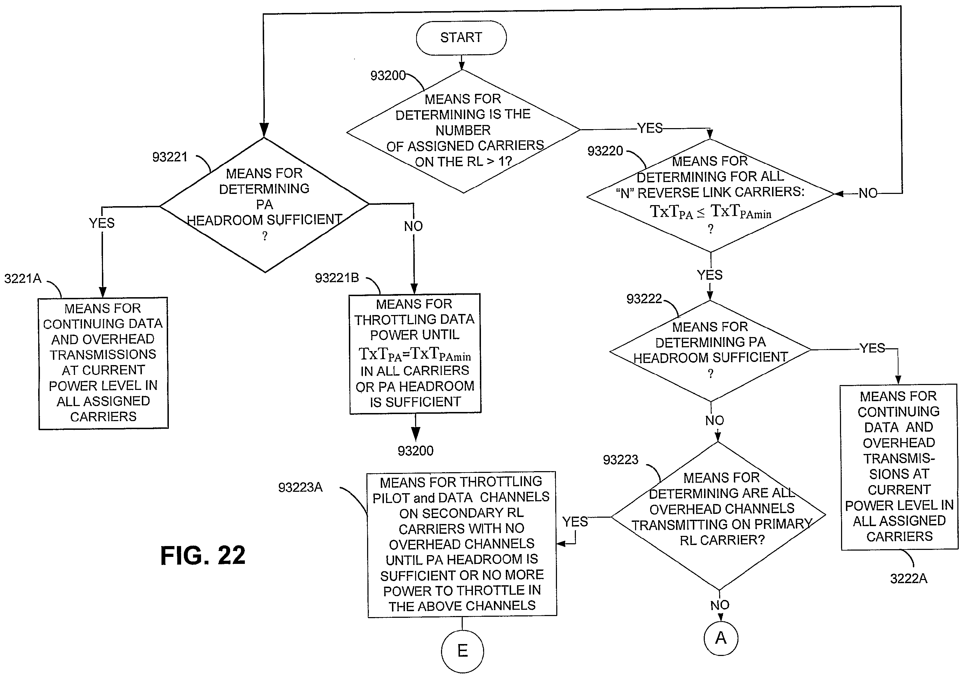

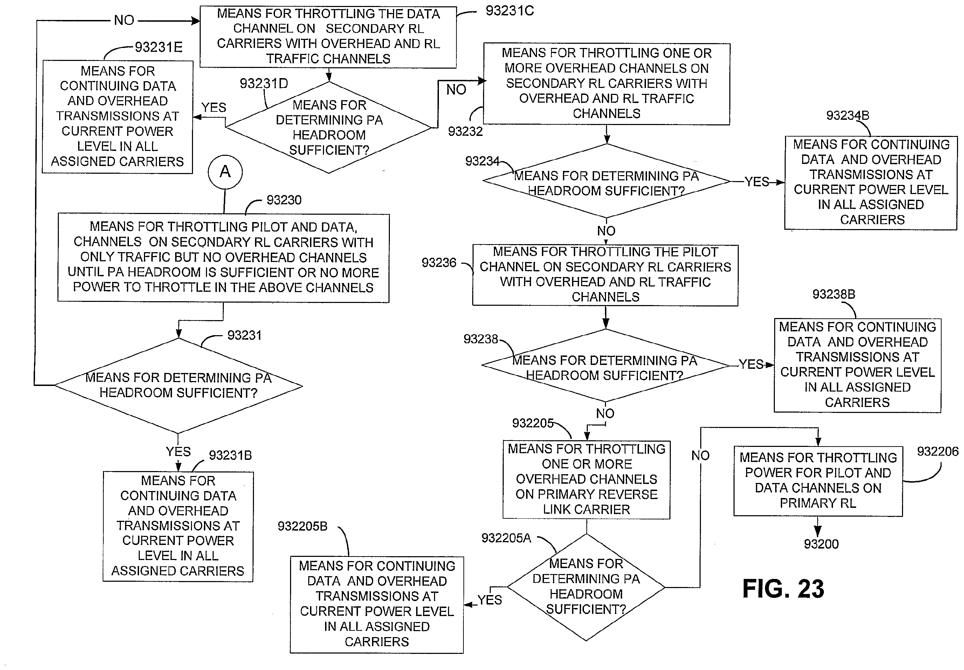

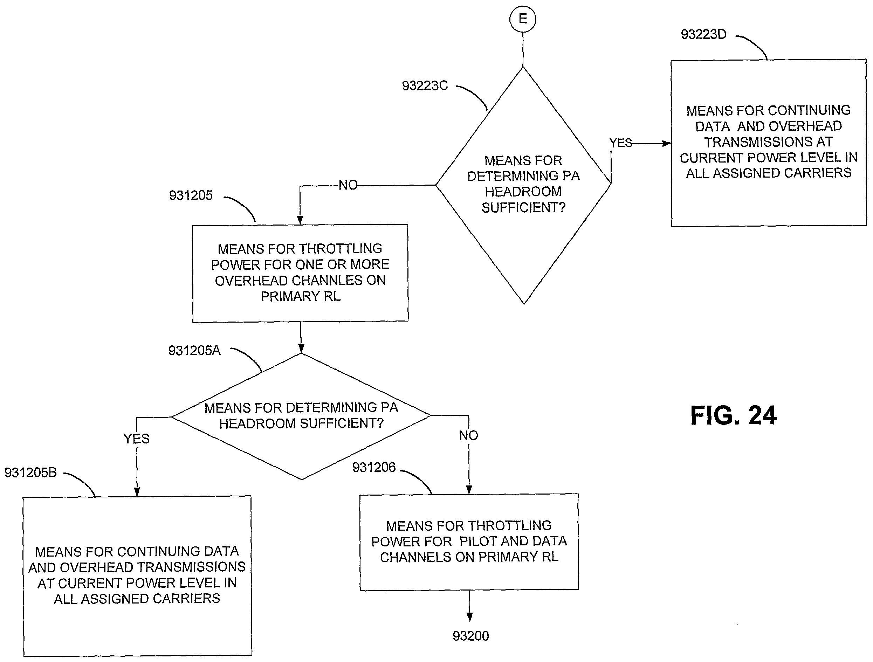

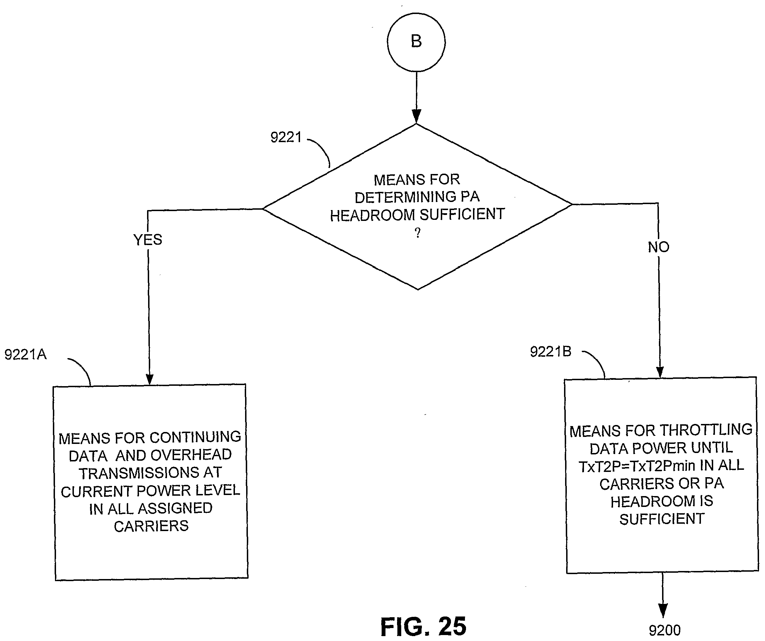

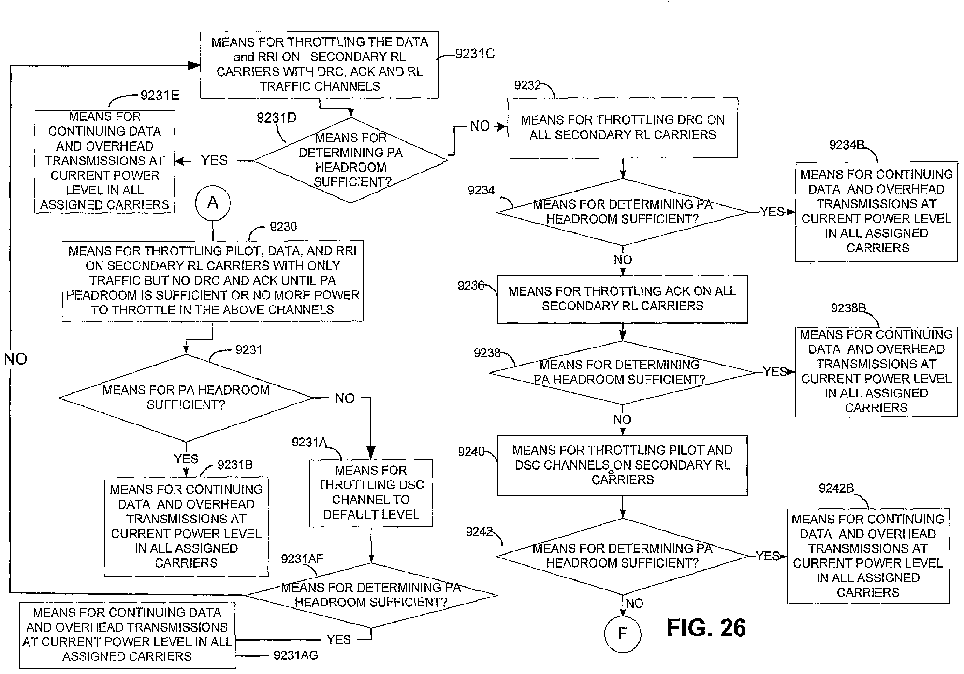

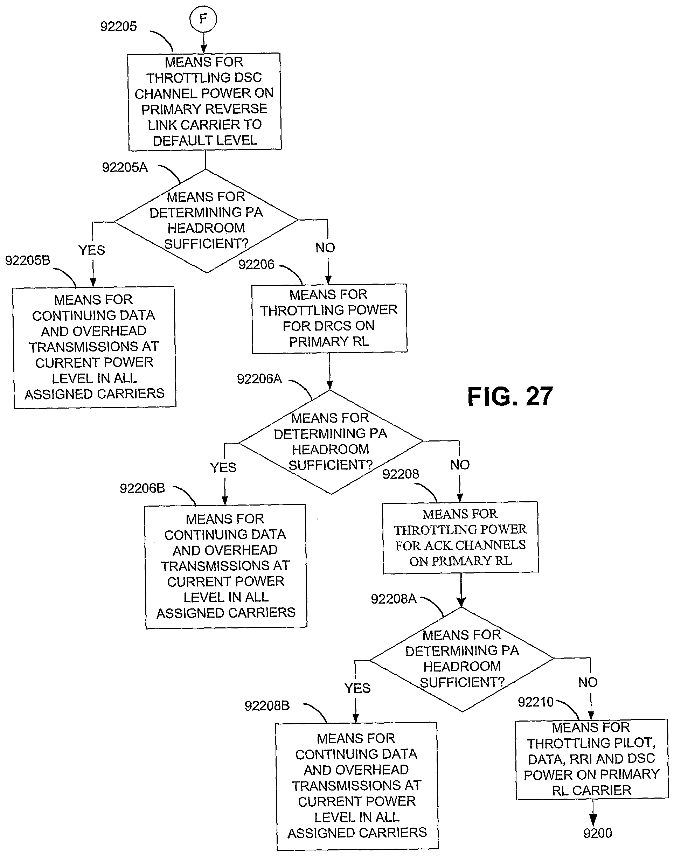

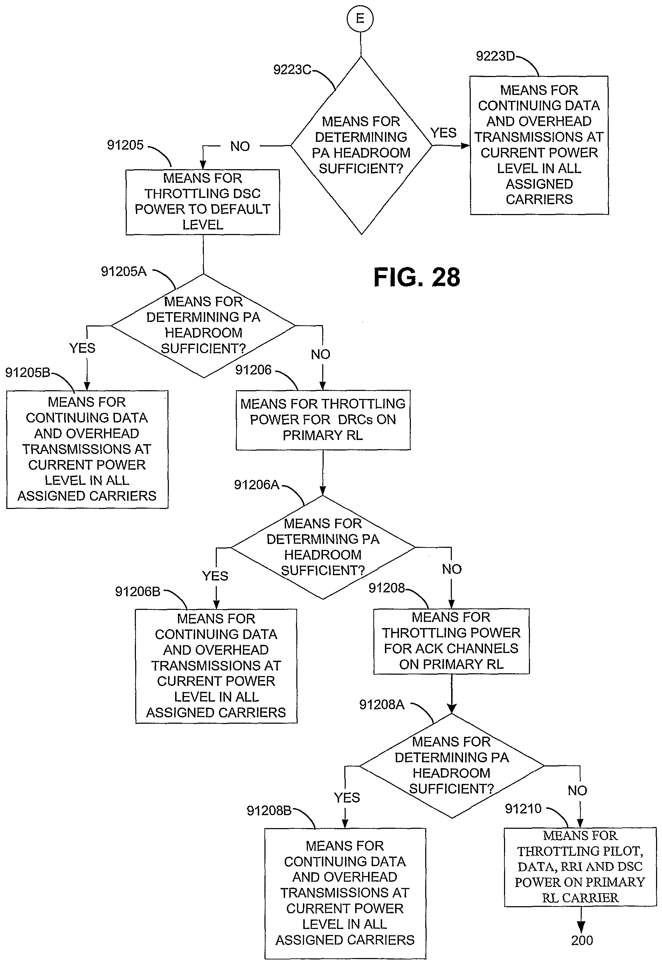

FIG. 7 illustrates an embodiment of an AT 106 according to the present patent application including transmit circuitry 264 (including PA 308), receive circuitry 8408, throttle control 306, decode process unit 258, processing unit 302, DTX control unit 8404, RRI control unit 8406, DRC control unit 8412 and memory 8416. The throttle control unit 306 implements at least one set of throttle rules, such as those illustrated above. Throttle rules provide means and methods for controlling transmit power on the RL. The steps illustrated in FIGs. 8-17 and 19-28 may be stored as instructions located as software or firmware 42 located in memory 8416. These instructions may be executed by the processing unit 302.
In another embodiment, the above RL power throttling rules disclosed above and illustrated in FIGs. 8-17, may be used with a WCDMA system, such as release 6 which contains traffic channels (i.e., voice and data), pilot and overhead channels. The uplink (which is WCDMA's version of reverse link) channels may include a dedicated physical channel (DPCH), a physical random access channel (PRACH), a dedicated channel (DCH), a random access channel (RACH), a dedicated control channel (DCCH), and a common control channel (CCCH). The DPCH consists of the dedicated physical data channel (DPDCH) which carriers the user data, and the dedicated physical control channel (DPCCH), which carries the physical layer control information (pilot data, TFCI and TPC). FIG. 18 is an example of a WCDMA protocol structure known in the art.
It is also noted that the methods and apparatuses of FIGs. 7-17 described above are performed by corresponding means plus function blocks illustrated in FIGs. 19-28.
Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.
Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.
The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in random access memory (RAM), flash memory, read only memory (ROM), electrically programmable ROM (EPROM), electrically erasable programmable ROM (EEPROM), registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention as defined by the appended claims.

## Claims

1. An access terminal (106), comprising:

   a processing unit (302);
   a memory (8416) operably connected to said processing unit;
   a receive circuitry (8408) operably connected to said processing unit;
   a transmit circuitry (264) having a power amplifier (308) used in both single carrier and multi-carrier operations, wherein said transmit circuitry is operably connected to said processing unit; and
   a throttle control unit (306) operably connected to said power amplifier,

   wherein said processing unit is adapted to execute instructions stored in said memory to:

   determine if the power amplifier headroom is sufficient by:

   summing a pilot channel power level, an overhead channel power level and a traffic channel power level over all assigned carriers, and
   determining if the sum is less than or equal to, or exceeds a maximum allowed transmit power for the power amplifier; and
   if the power amplifier headroom is not sufficient, throttle power by reducing transmit power of one or more channels in accordance with power throttling rules until the sum is less than or equal to the maximum allowed transmit power for the power amplifier to provide sufficient headroom for said power amplifier;

   wherein said instructions to throttle power to provide sufficient headroom for said power amplifier further comprises instructions to throttle power over a reverse link having multiple carriers, comprising:

   throttle power of at least one secondary reverse link carrier; and
   throttle power of a primary reverse link carrier;
   wherein the at least one secondary reverse link carrier and the primary reverse link carrier are throttled in the order secondary and then primary.

2. The access terminal according to claim 1, wherein said instructions to throttle power of a primary reverse link carrier, comprise instruction to:

   throttle one or more overhead channels on the primary reverse link carrier until there is sufficient power amplifier headroom or the plurality of overhead channels has been throttled down.

3. The access terminal according to claim 2, wherein said one or more overhead channels comprises one or more of the following channels:

a data source control channel, a data rate control channel, an acknowledgment channel, a pilot channel and a reverse rate indicator channel.

4. The access terminal according to claim 2, further comprising the instruction to:

throttle at least one traffic channel on the primary reverse link carrier.

5. The access terminal according to claim 2, further comprising the instruction to:

throttling at least one pilot channel on the primary reverse link carrier.

6. The access terminal according to claim 2, further comprising the instructions to:

throttle at least one traffic channel and at least one pilot channel on the primary reverse link carrier.

7. The access terminal according to claim 1, wherein said instruction to throttle power of at least one secondary reverse link carrier comprises:

throttle one or more of pilot, data, and reverse rate indicator channel powers.

8. The access terminal according to claim 1, wherein said instructions to provide sufficient headroom for said power amplifier further comprises throttling power of said at least one secondary reverse link carrier before throttling power of said primary reverse link carrier, wherein said instruction to throttle power of at least one secondary reverse link carrier comprises throttling power in a following sequence:

throttle one or more of pilot, data, and reverse rate indicator channel powers; and
wherein said instruction to throttle power of a primary reverse link carrier comprises throttling power in the following sequence:

throttle a data source control channel power down to a default level;
throttle power for at least one data rate control channel on said reverse link carrier until there is sufficient power amplifier headroom or the at least one data rate control channel power has been throttled down;
throttle power for at least one acknowledgment channel on said reverse link carrier until there is sufficient power amplifier headroom or said at least one acknowledgment channel power has been throttled down; and
throttle one or more of the pilot, data, reverse rate indicator and said data source control channel powers until there is sufficient headroom.

9. The access terminal according to claim 1, wherein said instruction to throttle power of at least one secondary reverse link carrier comprises:

throttle one or more of pilot and data channel powers.

10. The access terminal according to claim 1, wherein said instruction to throttle power of at least one secondary reverse link carrier comprises throttle one or more of pilot and data channel powers; and
wherein said instruction to throttle power of a primary reverse link carrier comprises:

throttle power for at least one overhead channel on said primary reverse link carrier until there is sufficient power amplifier headroom or the at least one data rate control channel power has been throttled down; and
throttle one or more of the pilot and data channel powers until there is sufficient headroom.

11. The access terminal according to claim 1, wherein said instruction to throttle power of at least one secondary reverse link carrier comprises:

throttle one or more of pilot, data, and reverse rate indicator channel powers on a first secondary carrier; throttle power for a data source control down to a default level on a second secondary carrier;
throttle power for one or more of the data and reverse rate indicator channel powers on said second secondary carrier until there is sufficient power amplifier headroom or the data and reverse rate indicator channel powers have been throttled down;

EP 1 905 170 B1

throttle power for at least one data rate control channel on said second secondary carrier until there is sufficient power amplifier headroom or the at least one data rate control channel power has been throttled down; throttle power for at least one acknowledgement channel on said second secondary carrier until there is sufficient power amplifier headroom or the acknowledgement channel power has been throttled down; and throttle power for at least one pilot channel and said data source control channel on said second secondary carrier until there is sufficient power amplifier headroom or the at least one pilot and the data source control channel powers have been throttled down.

12. The access terminal according to claim 1, wherein said instructions to throttle power to provide sufficient headroom for said power amplifier comprises throttling power of said at least one secondary reverse link carrier before throttling power of said primary reverse link carrier;

wherein said instruction to throttle power of at least one secondary reverse link carrier comprises throttling power in a following sequence; throttle one or more of pilot, data, and reverse rate indicator channel powers on a first secondary carrier; throttling power for a data source channel on a second secondary carrier; throttling power for one or more of the data and reverse rate indicator channel powers on said second secondary carrier; throttling power for at least one data rate control channel on said second secondary carrier; throttling power for at least one acknowledgement channel on said second secondary carrier; throttling power for at least one pilot channel and said data source channel on said second secondary carrier; and wherein said instruction to throttle power of a primary reverse link carrier comprises throttling power in a following sequence:

throttle a data source control channel power down to a default level; throttle power for at least one data rate control channel on said primary reverse link carrier until there is sufficient power amplifier headroom or the at least one data rate control channel power has been throttled down; throttle power for at least one acknowledgment channel on said primary reverse link carrier until there is sufficient power amplifier headroom or said at least one acknowledgment channel power has been throttled down; and throttle one or more of the pilot, data, reverse rate indicator and said data source control channel powers until there is sufficient headroom.

13. The access terminal according to claim 1, wherein said instruction to throttle power of at least one secondary reverse link carrier comprises:

throttle one or more pilot and data channel powers on a first secondary carrier; throttle power for one or more data channel powers on a second secondary carrier; and throttle power for at least one overhead channel on said second secondary carrier.

14. The access terminal according to claim 1, wherein said instruction to throttle power of at least one secondary reverse link carrier comprises:

throttle one or more pilot and data channel powers on a first secondary carrier; throttle power for one or more of data channel powers on a second secondary carrier; throttle power for at least one overhead channel on said second secondary carrier; and wherein said instruction to throttle power of a primary reverse link carrier comprises:

throttle power for at least one overhead channel on said primary reverse link carrier until there is sufficient power amplifier headroom or the at least one data rate control channel power has been throttled down; and throttle one or more of the pilot and data channel powers until there is sufficient headroom.

15. A method of throttling power over a reverse link, comprising the steps of:

determining if the headroom of a power amplifier in an access terminal is sufficient by:

summing a pilot channel power level, an overhead channel power level and a traffic channel power level over all assigned carriers, and

determining if the sum is less than or equal to, or exceeds a maximum allowed transmit power for the power amplifier; and

if the power amplifier headroom is not sufficient, throttling power by reducing transmit power of one or more channels on the reverse link in accordance with power throttling rules until the sum is less than or equal to the maximum allowed transmit power for the power amplifier to provide sufficient headroom for a power amplifier;

wherein the power is throttled over a reverse link having multiple carriers;

wherein power of at least one secondary reverse link carrier is throttled; and power of a primary reverse link carrier is throttled;

wherein the at least one secondary reverse link carrier and the primary reverse link carrier are throttled in the order secondary and then primary.

16. The method of throttling power over a reverse link according to claim 15, wherein throttling power of a primary reverse link carrier comprises the step of:

throttling one or more overhead channels on the primary reverse link carrier until there is sufficient power amplifier headroom or the plurality of overhead channels has been throttled down.

17. The method of throttling power over a reverse link according to claim 16, wherein said one or more overhead channels comprises one or more of the following channels:

a data source control channel, a data rate control channel, an acknowledgment channel, a pilot channel and a reverse rate indicator channel.

18. The method of throttling power over a reverse link according to claim 16, further comprising:

throttling at least one traffic channel on the primary reverse link carrier.

19. The method of throttling power over a reverse link according to claim 16, further comprising the step of:

throttling at least one pilot channel on the primary reverse link carrier.

20. The method of throttling power over a reverse link according to claim 16, further comprising the step of:

throttling at least one traffic channel and at least one pilot channel on the primary reverse link carrier.

21. The method of throttling power over a reverse link according to claim 15, wherein said step of throttling power of at least one secondary reverse link carrier comprises:

throttling one or more of pilot, data, and reverse rate indicator channel powers.

22. The method of throttling power over a reverse link according to claim 15, wherein said steps to provide sufficient headroom for said power amplifier further comprises throttling power of said at least one secondary reverse link carrier before throttling power of said primary reverse link carrier, wherein said step of throttling power of at least one secondary reverse link carrier comprises throttling power in a following sequence:

throttling one or more of pilot, data, and reverse rate indicator channel powers; and
wherein said step of throttling power of a primary reverse link carrier comprises throttling power in the following sequence: throttling a data source control channel power down to a default level;
throttling power for at least one data rate control channel on said reverse link carrier until there is sufficient power amplifier headroom or the at least one data rate control channel power has been throttled down;
throttling power for at least one acknowledgment channel on said reverse link carrier until there is sufficient power amplifier headroom or said at least one acknowledgment channel power has been throttled down; and
throttling one or more of the pilot, data, reverse rate indicator and said data source control channel powers until there is sufficient headroom.

23. The method of throttling power over a reverse link according to claim 15, wherein said step of throttling power of at least one secondary reverse link carrier comprises:

throttling one or more of pilot and data channel powers.

**24.** The method of throttling power over a reverse link according to claim 15, wherein:

said step of throttling power of at least one secondary reverse link carrier comprises throttling one or more of pilot and data channel powers; and
wherein said step of throttling power of a primary reverse link carrier comprises:

throttling power for at least one overhead channel on said primary reverse link carrier until there is sufficient power amplifier headroom or the at least one data rate control channel power has been throttled down; and
throttling one or more of the pilot and data channel powers until there is sufficient headroom.

**25.** The method of throttling power over a reverse link according to claim 15, wherein said step of throttling power of at least one secondary reverse link carrier comprises:

throttling one or more of pilot, data, and reverse rate indicator channel powers on a first secondary carrier;
throttling power for a data source control down to a default level on a second secondary carrier;
throttling power for one or more of the data and reverse rate indicator channel powers on said second secondary carrier until there is sufficient power amplifier headroom or the data and reverse rate indicator channel powers have been throttled down;
throttling power for at least one data rate control channel on said second secondary carrier until there is sufficient power amplifier headroom or the at least one data rate control channel power has been throttled down;
throttling power for at least one acknowledgement channel on said second secondary carrier until there is sufficient power amplifier headroom or the acknowledgement channel power has been throttled down; and
throttling power for at least one pilot channel and said data source control channel on said second secondary carrier until there is sufficient power amplifier headroom or the at least one pilot and the data source control channel powers have been throttled down.

**26.** The method of throttling power over a reverse link according to claim 15, wherein said instructions to throttle power to provide sufficient headroom for said power amplifier comprises throttling power of said at least one secondary reverse link carrier before throttling power of said primary reverse link carrier, wherein said step of throttling power of at least one secondary reverse link carrier comprises throttling power in a following sequence;

throttling one or more of pilot, data, and reverse rate indicator channel powers on a first secondary carrier;
throttling power for a data source channel on a second secondary carrier;
throttling power for one or more of the data and reverse rate indicator channel powers on said second secondary carrier;
throttling power for at least one data rate control channel on said second secondary carrier;
throttling power for at least one acknowledgement channel on said second secondary carrier;
throttling power for at least one pilot channel and said data source channel on said second secondary carrier; and
wherein said step of throttling power of a primary reverse link carrier comprises throttling power in the following sequence:

throttling a data source control channel power down to a default level;
throttling power for at least one data rate control channel on said primary reverse link carrier until there is sufficient power amplifier headroom or the at least one data rate control channel power has been throttled down;
throttling power for at least one acknowledgment channel on said primary reverse link carrier until there is sufficient power amplifier headroom or said at least one acknowledgment channel power has been throttled down; and
throttling one or more of the pilot, data, reverse rate indicator and said data source control channel powers until there is sufficient headroom.

**27.** The method of throttling power over a reverse link according to claim 15, wherein said step of reducing transmit power of one or more channels on the reverse link in accordance with power throttling rules to throttle power of at least one secondary reverse link carrier comprises:

throttling one or more pilot and data channel powers on a first secondary carrier;
throttling power for one or more data channel powers on a second secondary carrier; and
throttling power for at least one overhead channel on said second secondary carrier.

28. The method of throttling power over a reverse link according to claim 15, wherein said step of reducing transmit power of one or more channels on the reverse link in accordance with power throttling rules to throttle power of at least one secondary reverse link carrier comprises:

throttling one or more pilot and data channel powers on a first secondary carrier;
throttling power for one or more of data channel powers on a second secondary carrier;
throttling power for at least one overhead channel on said second secondary carrier; and
wherein said step of throttling power of a primary reverse link carrier comprises:

throttling power for at least one overhead channel on said primary reverse link carrier until there is sufficient power amplifier headroom or the at least one data rate control channel power has been throttled down; and
throttling one or more of the pilot and data channel powers until there is sufficient headroom.

**Patentansprüche**

1. Ein Zugriffsendgerät (106), aufweisend:

eine Verarbeitungseinheit (302),
einen Speicher (8416), der operativ mit der Verarbeitungseinheit verbunden ist,
einen Empfangsschaltungsaufbau (8408), der operativ mit der Verarbeitungseinheit verbunden ist,
einen Sendeschaltungsaufbau (264), der einen in Einzelträger- und Mehrträger-Operationen verwendeten Leistungsverstärker (308) aufweist, wobei der Sendeschaltungsaufbau operativ mit der Verarbeitungseinheit verbunden ist, und
eine Drosselsteuereinheit (306), die operativ mit dem Leistungsverstärker verbunden ist, wobei die Verarbeitungseinheit ausgebildet ist zum Ausführen von in dem Speicher gespeicherten Befehlen zum:

Bestimmen, ob die Leistungsverstärkerreserve ausreicht, durch:

Summieren eines Pilotkanal-Leistungspegels, eines Overheadkanal-Leistungspegels und eines Verkehrskanal-Leistungspegels über alle zugewiesenen Träger, und
Bestimmen, ob die Summe kleiner oder gleich einer maximal zulässigen Sendeleistung für den Leistungsverstärker ist oder diesen überschreitet, und
wenn die Leistungsverstärkerreserve nicht ausreicht, Drosseln der Leistung durch das Reduzieren der Sendeleistung eines oder mehrerer Kanäle gemäß Leistungsdrosselungsregeln, bis die Summe kleiner oder gleich der maximal zulässigen Sendeleistung für den Leistungsverstärker ist, um eine ausreichende Reserve für den Leistungsverstärker vorzusehen,

wobei die Befehle zum Drosseln der Leistung für das Vorsehen einer ausreichenden Reserve für den Leistungsverstärker weiterhin Befehle zum Drosseln der Leistung über eine Rückwärtsverbindung mit mehreren Trägern aufweisen, aufweisend:

Drosseln der Leistung wenigstens eines sekundären Rückwärtsverbindungsträgers, und
Drosseln der Leistung eines primären Rückwärtsverbindungsträgers,

wobei der wenigstens eine sekundäre Rückwärtsverbindungsträger und der primäre Rückwärtsverbindungsträger in der Reihenfolge von sekundär und dann primär gedrosselt werden.

2. Zugriffsendgerät nach Anspruch 1, wobei die Befehle zum Drosseln der Leistung eines primären Rückwärtsverbindungsträgers einen Befehl aufweisen zum:

Drosseln eines oder mehrerer Overheadkanäle auf dem primären Rückwärtsverbindungsträger, bis eine ausreichende Leistungsverstärkerreserve vorhanden ist oder die Vielzahl von Overheadkanälen nach unten gedrosselt wurde.

**3.** Zugriffsendgerät nach Anspruch 2, wobei der eine oder die mehreren Overheadkanäle einen oder mehrere der folgenden Kanäle aufweisen:

einen Datenquellen-Steuerkanal, einen Datenraten-Steuerkanal, einen Bestätigungskanal, einen Pilotkanal und einen Rückwärtsraten-Indikatorkanal.

**4.** Zugriffsendgerät nach Anspruch 2, das weiterhin einen Befehl aufweist zum:

Drosseln wenigstens eines Verkehrskanals auf dem primären Rückwärtsverbindungsträger.

**5.** Zugriffsendgerät nach Anspruch 2, das weiterhin einen Befehl aufweist zum:

Drosseln wenigstens eines Pilotkanals auf dem primären Rückwärtsverbindungsträger.

**6.** Zugriffsendgerät nach Anspruch 2, das weiterhin Befehle aufweist zum:

Drosseln wenigstens eines Verkehrskanals und wenigstens eines Pilotkanals auf dem primären Rückwärtsverbindungsträger.

**7.** Zugriffsendgerät nach Anspruch 1, wobei der Befehl zum Drosseln der Leistung wenigstens eines sekundären Rückwärtsverbindungsträgers aufweist:

Drosseln einer oder mehrerer Pilot-, Daten- und Rückwärtsraten-Indikatorkanalleistungen.

**8.** Zugriffsendgerät nach Anspruch 1, wobei die Befehle zum Vorsehen einer ausreichenden Reserve für den Leistungsverstärker weiterhin das Drosseln der Leistung des wenigstens einen sekundären Rückwärtsverbindungsträgers vor dem Drosseln der Leistung des primären Rückwärtsverbindungsträgers aufweisen, wobei der Befehl zum Drosseln der Leistung wenigstens eines sekundären Rückwärtsverbindungsträgers das Drosseln der Leistung in der folgenden Abfolge aufweist:

Drosseln einer oder mehrerer Pilot-, Daten- und Rückwärtsraten-Indikatorkanalleistungen, und wobei der Befehl zum Drosseln der Leistung eines primären Rückwärtsverbindungsträgers das Drosseln der Leistung in der folgenden Abfolge aufweist:

Drosseln einer Datenquellen-Steuerkanalleistung nach unten zu einem Standardpegel, Drosseln der Leistung für wenigstens einen Datenraten-Steuerkanal auf dem Rückwärtsverbindungsträger, bis eine ausreichende Leistungsverstärkerreserve vorhanden ist oder die wenigstens eine Datenraten-Steuerkanalleistung nach unten gedrosselt wurde, Drosseln der Leistung für wenigstens einen Bestätigungskanal auf dem Rückwärtsverbindungsträger, bis eine ausreichende Leistungsverstärkerreserve vorhanden ist oder die wenigstens eine Bestätigungskanalleistung nach unten gedrosselt wurde, und Drosseln einer oder mehrerer der Pilot-, Daten-, Rückwärtsraten-Indikator- und Datenquellen-Steuerkanalleistungen, bis eine ausreichende Reserve vorhanden ist.

**9.** Zugriffsendgerät nach Anspruch 1, wobei der Befehl zum Drosseln der Leistung wenigstens eines sekundären Rückwärtsverbindungsträgers aufweist:

Drosseln einer oder mehrerer Pilot- und Datenkanalleistungen.

**10.** Zugriffsendgerät nach Anspruch 1, wobei der Befehl zum Drosseln der Leistung wenigstens eines sekundären Rückwärtsverbindungsträgers das Drosseln einer oder mehrerer Pilot- und Datenkanalleistungen aufweist, und wobei der Befehl zum Drosseln der Leistung eines primären Rückwärtsverbindungsträgers aufweist:

Drosseln der Leistung für wenigstens einen Overheadkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde, und Drosseln einer oder mehrerer der Pilot- und Datenkanalleistungen, bis eine ausreichende Reserve vorhanden ist.

**11.** Zugriffsendgerät nach Anspruch 1, wobei der Befehl zum Drosseln der Leistung wenigstens eines sekundären Rückwärtsverbindungsträgers aufweist:

Drosseln einer oder mehrerer Pilot-, Daten- und Rückwärtsraten-Indikatorkanalleistungen auf einem ersten sekundären Träger,
Drosseln der Leistung für eine Datenquellensteuerung nach unten zu einem Standardpegel auf einem zweiten sekundären Träger,
Drosseln der Leistung für eine oder mehrere der Daten- und Rückwärtsraten-Indikatorkanalleistungen auf dem zweiten sekundären Träger, bis eine ausreichende Leistungsverstärkerreserve vorhanden ist oder die Daten- und Rückwärtsraten-Indikatorkanalleistungen nach unten gedrosselt wurden,
Drosseln der Leistung für wenigstens einen Datenraten-Steuerkanal auf dem zweiten sekundären Träger, bis eine ausreichende Leistungsverstärkerreserve vorhanden ist oder die wenigstens eine Datenraten-Steuerkanalleistung nach unten gedrosselt wurde,
Drosseln der Leistung für wenigstens einen Bestätigungskanal auf dem zweiten sekundären Träger, bis eine ausreichende Leistungsverstärkerreserve vorhanden ist oder die Bestätigungskanalleistung nach unten gedrosselt wurde, und
Drosseln der Leistung für wenigstens einen Pilotkanal und den Datenquellen-Steuerkanal auf dem zweiten sekundären Träger, bis eine ausreichende Leistungsverstärkerreserve vorhanden ist oder die wenigstens eine Pilot- und die Datenquellen-Steuerkanalleistungen nach unten gedrosselt wurden.

**12.** Zugriffsendgerät nach Anspruch 1, wobei die Befehle zum Drosseln der Leistung für das Vorsehen einer ausreichenden Reserve für den Leistungsverstärker das Drosseln der Leistung des wenigstens einen sekundären Rückwärtsverbindungsträgers vor dem Drosseln der Leistung des primären Rückwärtsverbindungsträgers aufweisen, wobei der Befehl zum Drosseln der Leistung wenigstens eines sekundären Rückwärtsverbindungsträgers das Drosseln der Leistung in der folgenden Abfolge aufweist:

Drosseln einer oder mehrerer Pilot-, Daten- und Rückwärtsraten-Indikatorkanalleistungen auf einem ersten sekundären Träger,
Drosseln der Leistung für einen Datenquellenkanal auf einem zweiten sekundären Träger,
Drosseln der Leistung für eine oder mehrere der Daten- und Rückwärtsraten-Indikatorkanalleistungen auf dem zweiten sekundären Träger,
Drosseln der Leistung für wenigstens einen Datenraten-Steuerkanal auf dem zweiten sekundären Träger,
Drosseln der Leistung für wenigstens einen Bestätigungskanal auf dem zweiten sekundären Träger,
Drosseln der Leistung für wenigstens einen Pilotkanal und den Datenquellenkanal auf dem zweiten sekundären Träger, und
wobei der Befehl zum Drosseln der Leistung eines primären Rückwärtsverbindungsträgers das Drosseln der Leistung in der folgenden Abfolge aufweist:
Drosseln einer Datenquellen-Steuerkanalleistung nach unten zu einem Standardpegel,
Drosseln der Leistung für wenigstens einen Datenraten-Steuerkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde,
Drosseln der Leistung für wenigstens einen Bestätigungskanal auf dem primären Rückwärtsverbindungsträger, bis eine ausreichende Leistungsverstärkerreserve vorhanden ist oder die wenigstens eine Bestätigungskanalleistung nach unten gedrosselt wurde, und
Drosseln einer oder mehrerer der Pilot-, Daten-, Rückwärtsraten-Indikator- und Datenquellen-Steuerkanalleistungen, bis eine ausreichende Reserve vorhanden ist.

**13.** Zugriffsendgerät nach Anspruch 1, wobei der Befehl zum Drosseln der Leistung wenigstens eines sekundären Rückwärtsverbindungsträgers aufweist:

Drosseln einer oder mehrerer Pilot- und Datenkanalleistungen auf einem ersten sekundären Träger,
Drosseln der Leistung für eine oder mehrere Datenkanalleistungen auf einem zweiten sekundären Träger, und
Drosseln der Leistung für wenigstens einen Overheadkanal auf dem zweiten sekundären Träger.

**14.** Zugriffsendgerät nach Anspruch 1, wobei der Befehl zum Drosseln der Leistung wenigstens eines sekundären Rückwärtsverbindungsträgers aufweist:

Drosseln einer oder mehrerer Pilot- und Datenkanalleistungen auf einem ersten sekundären Träger,

Drosseln der Leistung für eine oder mehrere Datenkanalleistungen auf einem zweiten sekundären Träger, Drosseln der Leistung für wenigstens einen Overheadkanal auf dem zweiten sekundären Träger, und wobei der Befehl zum Drosseln der Leistung eines primären Rückwärtsverbindungsträgers aufweist:

Drosseln der Leistung für wenigstens einen Overheadkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde, und
Drosseln einer oder mehrerer der Pilot- und Datenkanalleistungen, bis eine ausreichende Reserve vorhanden ist.

15. Ein Verfahren zum Drosseln der Leistung über eine Rückwärtsverbindung, das die folgenden Schritte aufweist:

Bestimmen, ob die Reserve eines Leistungsverstärkers in einem Zugriffsendgerät ausreicht, durch:

Summieren eines Pilotkanal-Leistungspegels, eines Overheadkanal-Leistungspegels und eines Verkehrskanal-Leistungspegels über alle zugewiesenen Träger, und
Bestimmen, ob die Summe kleiner oder gleich einer maximal zulässigen Sendeleistung für den Leistungsverstärker ist oder diesen überschreitet, und
wenn die Leistungsverstärkerreserve nicht ausreicht, Drosseln der Leistung durch das Reduzieren der Sendeleistung eines oder mehrerer Kanäle auf der Rückwärtsverbindung gemäß Leistungsdrosselungsregeln, bis die Summe kleiner oder gleich der maximal zulässigen Sendeleistung für den Leistungsverstärker ist, um eine ausreichende Reserve für einen Leistungsverstärker vorzusehen,

wobei die Leistung über eine Rückwärtsverbindung mit mehreren Trägern gedrosselt wird,
wobei die Leistung wenigstens eines sekundären Rückwärtsverbindungsträgers gedrosselt wird und die Leistung eines primären Rückwärtsverbindungsträgers gedrosselt wird,
wobei der wenigstens eine sekundäre Rückwärtsverbindungsträger und der primäre Rückwärtsverbindungsträger in der Reihenfolge von sekundär und dann primär gedrosselt werden.

16. Verfahren zum Drosseln der Leistung über eine Rückwärtsverbindung nach Anspruch 15, wobei das Drosseln der Leistung eines primären Rückwärtsverbindungsträgers den folgenden Schritt aufweist:

Drosseln eines oder mehrerer Overheadkanäle auf dem primären Rückwärtsverbindungsträger, bis eine ausreichende Leistungsverstärkerreserve vorhanden ist oder die Vielzahl von Overheadkanälen nach unten gedrosselt wurde.

17. Verfahren zum Drosseln der Leistung über eine Rückwärtsverbindung nach Anspruch 16, wobei der eine oder die mehreren Overheadkanäle einen oder mehreren der folgenden Kanäle aufweisen:

einen Datenquellen-Steuerkanal, einen Datenraten-Steuerkanal, einen Bestätigungskanal, einen Pilotkanal und einen Rückwärtsraten-Indikatorkanal.

18. Verfahren zum Drosseln der Leistung über eine Rückwärtsverbindung nach Anspruch 16, das weiterhin aufweist:

Drosseln wenigstens eines Verkehrskanals auf dem primären Rückwärtsverbindungsträger.

19. Verfahren zum Drosseln der Leistung über eine Rückwärtsverbindung nach Anspruch 16, das weiterhin den folgenden Schritt aufweist:

Drosseln wenigstens eines Pilotkanals auf dem primären Rückwärtsverbindungsträger.

20. Verfahren zum Drosseln der Leistung über eine Rückwärtsverbindung nach Anspruch 16, das weiterhin den folgenden Schritt aufweist:

Drosseln wenigstens eines Verkehrskanals und wenigstens eines Pilotkanals auf dem primären Rückwärtsverbindungsträger.

21. Verfahren zum Drosseln der Leistung über eine Rückwärtsverbindung nach Anspruch 15, wobei der Schritt zum Drosseln der Leistung wenigstens eines sekundären Rückwärtsverbindungsträgers aufweist:

Drosseln einer oder mehrerer Pilot-, Daten- und Rückwärtsraten-Indikatorkanalleistungen.

22. Verfahren zum Drosseln der Leistung über eine Rückwärtsverbindung nach Anspruch 15, wobei die Schritte zum Vorsehen einer ausreichenden Reserve für den Leistungsverstärker weiterhin das Drosseln der Leistung des wenigsten einen sekundären Rückwärtsverbindungsträgers vor dem Drosseln der Leistung des primären Rückwärtsverbindungsträgers aufweisen, wobei der Schritt zum Drosseln der Leistung wenigstens eines sekundären Rückwärtsverbindungsträgers das Drosseln der Leistung in der folgenden Abfolge aufweist:

Drosseln einer oder mehrerer Pilot-, Daten- und Rückwärtsraten-Indikatorkanalleistungen, und
wobei der Schritt zum Drosseln der Leistung eines primären Rückwärtsverbindungsträgers das Drosseln der Leistung in der folgenden Abfolge aufweist:

Drosseln einer Datenquellen-Steuerkanalleistung nach unten zu einem Standardpegel,
Drosseln der Leistung für wenigstens einen Datenraten-Steuerkanal auf dem Rückwärtsverbindungsträger, bis eine ausreichende Leistungsverstärkerreserve vorhanden ist oder die wenigstens eine Datenraten-Steuerkanalleistung nach unten gedrosselt wurde,
Drosseln der Leistung für wenigstens einen Bestätigungskanal auf dem Rückwärtsverbindungsträger, bis eine ausreichende Leistungsverstärkerreserve vorhanden ist oder die wenigstens eine Bestätigungskanalleistung nach unten gedrosselt wurde, und
Drosseln einer oder mehrerer der Pilot-, Daten-, Rückwärtsraten-Indikator- und Datenquellen-Steuerkanalleistungen nach unten, bis eine ausreichende Reserve vorhanden ist.

23. Verfahren zum Drosseln der Leistung über eine Rückwärtsverbindung nach Anspruch 15, wobei der Schritt zum Drosseln der Leistung wenigstens eines sekundären Rückwärtsverbindungsträgers aufweist:

Drosseln einer oder mehrerer Pilot- und Datenkanalleistungen.

24. Verfahren zum Drosseln der Leistung über eine Rückwärtsverbindung nach Anspruch 15, wobei:

der Schritt zum Drosseln der Leistung wenigstens eines sekundären Rückwärtsverbindungsträgers das Drosseln einer oder mehrerer Pilot- und Datenkanalleistungen aufweist, und
der Schritt zum Drosseln der Leistung eines primären Rückwärtsverbindungsträgers aufweist:

Drosseln der Leistung für wenigstens einen Overheadkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde, und
Drosseln einer oder mehrerer der Pilot- und Datenkanalleistungen, bis eine ausreichende Reserve vorhanden ist.

25. Verfahren zum Drosseln der Leistung über eine Rückwärtsverbindung nach Anspruch 15, wobei der Schritt zum Drosseln der Leistung wenigstens eines sekundären Rückwärtsverbindungsträgers aufweist:

Drosseln einer oder mehrerer Pilot-, Daten- und Rückwärtsraten-Indikatorkanalleistungen auf einem ersten sekundären Träger,
Drosseln der Leistung für einen Datenquellen-Steuerkanal nach unten zu einem Standardpegel auf einem zweiten sekundären Träger,
Drosseln der Leistung für eine oder mehrere der Daten- und Rückwärtsraten-Indikatorkanalleistungen auf dem zweiten sekundären Träger, bis eine ausreichende Leistungsverstärkerreserve vorhanden ist oder die Daten- und Rückwärtsraten-Indikatorkanalleistungen nach unten gedrosselt wurden,
Drosseln der Leistung für wenigstens einen Datenraten-Steuerkanal auf dem zweiten sekundären Träger, bis eine ausreichende Leistungsverstärkerreserve vorhanden ist oder die wenigstens eine Datenraten-Steuerkanalleistung nach unten gedrosselt wurde,
Drosseln der Leistung für wenigstens einen Bestätigungskanal auf dem zweiten sekundären Träger, bis eine ausreichende Leistungsverstärkerreserve vorhanden ist oder die Bestätigungskanalleistung nach unten gedrosselt wurde, und
Drosseln der Leistung für wenigstens einen Pilotkanal und den Datenquellen-Steuerkanal auf dem zweiten sekundären Träger, bis eine ausreichende Leistungsverstärkerreserve vorhanden ist oder die wenigstens eine Pilot- und die Datenquellen-Steuerkanalleistungen nach unten gedrosselt wurden.

26. Verfahren zum Drosseln der Leistung über eine Rückwärtsverbindung nach Anspruch 15, wobei die Befehle zum Drosseln der Leistung für das Vorsehen einer ausreichenden Reserve für den Leistungsverstärker weiterhin das Drosseln der Leistung des wenigstens einen sekundären Rückwärtsverbindungsträgers vor dem Drosseln der Leistung des primären Rückwärtsverbindungsträgers aufweisen, wobei der Schritt zum Drosseln der Leistung wenigstens eines sekundären Rückwärtsverbindungsträgers das Drosseln der Leistung in der folgenden Abfolge aufweist:

Drosseln einer oder mehrerer Pilot-, Daten- und Rückwärtsraten-Indikatorkanalleistungen auf einem ersten sekundären Träger,
Drosseln der Leistung für einen Datenquellenkanal auf einem zweiten sekundären Träger,
Drosseln der Leistung für eine oder mehrere der Daten- und Rückwärtsraten-Indikatorkanalleistungen auf dem zweiten sekundären Träger,
Drosseln der Leistung für wenigstens einen Datenraten-Steuerkanal auf dem zweiten sekundären Träger,
Drosseln der Leistung für wenigstens einen Bestätigungskanal auf dem zweiten sekundären Träger,
Drosseln der Leistung für wenigstens einen Pilotkanal und den Datenquellenkanal auf dem zweiten sekundären Träger, und
wobei der Schritt zum Drosseln der Leistung eines primären Rückwärtsverbindungsträgers das Drosseln der Leistung in der folgenden Abfolge aufweist:

Drosseln einer Datenquellen-Steuerkanalleistung nach unten zu einem Standardpegel,
Drosseln der Leistung für wenigstens einen Datenraten-Steuerkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde,
Drosseln der Leistung für wenigstens einen Bestätigungskanal auf dem primären Rückwärtsverbindungsträger, bis eine ausreichende Leistungsverstärkerreserve vorhanden ist oder die wenigstens eine Bestätigungskanalleistung nach unten gedrosselt wurde, und
Drosseln einer oder mehrerer der Pilot-, Daten-, Rückwärtsraten-Indikator- und Datenquellen-Steuerkanalleistungen, bis eine ausreichende Reserve vorhanden ist.

27. Verfahren zum Drosseln der Leistung über eine Rückwärtsverbindung nach Anspruch 15, wobei der Schritt zum Reduzieren der Sendeleistung eines oder mehrerer Kanäle auf der Rückwärtsverbindung gemäß Leistungsdrosselungsregeln zum Drosseln der Leistung wenigstens eines sekundären Rückwärtsverbindungsträgers aufweist:

Drosseln einer oder mehrerer Pilot- und Datenkanalleistungen auf einem ersten sekundären Träger,
Drosseln der Leistung einer oder mehrerer Datenkanalleistungen auf einem zweiten sekundären Träger, und
Drosseln der Leistung für wenigstens einen Overheadkanal auf dem zweiten sekundären Träger.

28. Verfahren zum Drosseln der Leistung über eine Rückwärtsverbindung nach Anspruch 15, wobei der Schritt zum Reduzieren der Sendeleistung eines oder mehrerer Kanäle auf der Rückwärtsverbindung gemäß Leistungsdrosselungsregeln zum Drosseln der Leistung wenigstens eines sekundären Rückwärtsverbindungsträgers aufweist:

Drosseln einer oder mehrerer Pilot- und Datenkanalleistungen auf einem ersten sekundären Träger,
Drosseln der Leistung für eine oder mehrere Datenkanalleistungen auf einem zweiten sekundären Träger,
Drosseln der Leistung für wenigstens einen Overheadkanal auf dem zweiten sekundären Träger, und
wobei der Schritt zum Drosseln der Leistung eines primären Rückwärtsverbindungsträgers aufweist:

Drosseln der Leistung für wenigstens einen Overheadkanal auf dem primären Rückwärtsverbindungsträger, bis eine ausreichende Leistungsverstärkerreserve vorhanden ist oder die wenigstens eine Datenraten-Steuerkanalleistung nach unten gedrosselt wurde, und
Drosseln einer oder mehrerer der Pilot- und Datenkanalleistungen, bis eine ausreichende Reserve vorhanden ist.

**Revendications**

1. Terminal d'accès (106) comprenant :

une unité de traitement (302) ;

une mémoire (8416) couplée de manière opérationnelle à ladite unité de traitement ;

des circuits de réception (8408) couplés de manière opérationnelle à ladite unité de traitement ;

des circuits de transmission (264) comprenant un amplificateur de puissance (308) utilisé dans des opérations à simple porteuse et des opérations multi-porteuses, lesdits circuits de transmission étant connectés à la ladite unité de traitement ; et

une unité de commande de gaz (306) connectée de manière opérationnelle audit amplificateur de puissance, ladite unité de traitement étant conçue pour exécuter des instructions stockées dans ladite mémoire pour :

déterminer si la marge de l'amplificateur de puissance est suffisante par :

additionner un niveau de puissance de canal pilote, un niveau de puissance de canal à l'origine d'une charge implicite supplémentaire et un niveau de puissance de canal de trafic sur toutes les porteuses assignées et

déterminer si la somme est inférieure ou égale ou dépasse une puissance de transmission maximum autorisée pour l'amplificateur de puissance ; et

si la marge de l'amplificateur de puissance n'est pas suffisante, réduire la puissance en réduisant la puissance de transmission d'un ou plusieurs canaux selon des règles de réduction de puissance jusqu'à ce que la somme soit inférieure ou égale à la puissance de transmission maximum autorisée pour l'amplificateur de puissance afin de fournir une marge suffisante pour ledit amplificateur de puissance ;

lesdites instructions de réduction de puissance pour fournir une marge suffisante pour ledit amplificateur de puissance comprenant en outre des instructions pour réduire la puissance sur une liaison inverse ayant de multiples porteuses, comprenant :

la réduction de la puissance d'au moins une porteuse de liaison inverse secondaire ; et

la réduction de la puissance d'une porteuse de liaison inverse primaire ;

l'au moins une porteuse de liaison inverse secondaire et la porteuse de liaison inverse primaire sont réduites dans l'ordre secondaire puis primaire.

2. Terminal d'accès selon la revendication 1, dans lequel lesdites instructions pour réduire la puissance d'une porteuse de liaison inverse primaire comprennent une instruction pour :

réduire un ou plusieurs canaux à l'origine d'une charge implicite supplémentaire sur la porteuse de liaison inverse primaire jusqu'à ce qu'il y ait une marge d'amplificateur de puissance suffisante ou jusqu'à ce que la puissance d'une pluralité de canaux à l'origine d'une charge implicite supplémentaire aient été réduite.

3. Terminal d'accès selon la revendication 2, dans lequel lesdits un ou plusieurs canaux à l'origine d'une charge implicite supplémentaire comprend un ou plusieurs canaux suivants :

un canal de commande de source de données, un canal de commande de débit de données, un canal d'accusé de réception, un canal pilote et un canal d'indicateur de débit inverse.

4. Terminal d'accès selon la revendication 2, comprenant en outre l'instruction pour :

réduire la puissance d'au moins un canal de trafic sur la porteuse de liaison inverse primaire.

5. Terminal d'accès selon la revendication 2, comprenant en outre l'instruction pour :

réduire la puissance d'au moins un canal pilote sur la porteuse de liaison inverse primaire.

6. Terminal d'accès selon la revendication 2, comprenant en outre l'instruction pour :

réduire la puissance d'au moins un canal de trafic et au moins un canal pilote sur la porteuse de liaison inverse primaire.

7. Terminal d'accès selon la revendication 1, dans lequel ladite instruction pour réduire la puissance d'au moins une porteuse de liaison inverse secondaire comprend :

la réduction d'une ou de plusieurs parmi les puissances de canal pilote, de données et d'indicateur de débit inverse.

8. Terminal d'accès selon la revendication 1, dans lequel lesdites instructions pour fournir suffisamment de marge pour ledit amplificateur de puissance comprend en outre la réduction de la puissance de ladite au moins une porteuse de liaison inverse secondaire avant la réduction de puissance de ladite porteuse de liaison inverse primaire, ladite instruction pour réduire la puissance de l'au moins une porteuse de liaison inverse secondaire comprenant la réduction de la puissance dans un ordre suivant :

réduction d'une ou de plusieurs parmi les puissances de canal pilote, de données et d'indicateur de débit inverse ; et
ladite instruction pour réduire la puissance d'une porteuse de liaison inverse primaire comprend la réduction de la puissance dans l'ordre suivant :

réduction d'une puissance de canal de commande de source de données vers un niveau par défaut ;
réduction d'une puissance pour au moins un canal de commande de débit de données sur ladite porteuse de liaison inverse jusqu'à ce qu'il y ait suffisamment de marge pour l'amplificateur de puissance ou jusqu'à ce que l'au moins une puissance de canal de commande de débit de données ait été réduite ;
réduction d'une puissance pour au moins un canal d'accusé de réception sur ladite porteuse de liaison inverse jusqu'à ce qu'il y ait suffisamment de marge pour l'amplificateur de puissance ou jusqu'à ce qu'une puissance de canal d'accès de réception ait été réduite ; et
réduction d'une ou de plusieurs parmi les puissances de canal pilote, de données, d'indicateur de débit inverse et desdites puissances de canaux de commande de source jusqu'à ce qu'il y ait suffisamment de marge.

9. Terminal d'accès selon la revendication 1, dans lequel ladite instruction pour la réduction de la puissance d'au moins une porteuse de liaison inverse secondaire comprend :

la réduction d'une ou de plusieurs parmi les puissances de canal pilote et de données.

10. Terminal d'accès selon la revendication 1, dans lequel ladite instruction pour la réduction de la puissance d'au moins une porteuse de liaison inverse secondaire comprend la réduction d'une ou de plusieurs parmi les puissances de canal pilote et de données ; et
ladite instruction pour réduire la puissance d'une porteuse de liaison inverse primaire comprend :

la réduction d'une puissance pour au moins un canal à l'origine d'une charge implicite supplémentaire sur ladite porteuse de liaison inverse primaire jusqu'à ce qu'il y ait suffisamment de marge pour l'amplificateur de puissance ou jusqu'à ce que l'au moins une puissance de canal de commande de débit de données ait été réduite ; et
la réduction d'une ou plusieurs des puissances des canaux pilote et de données jusqu'à ce qu'il y ait suffisamment de marge.

11. Terminal d'accès selon la revendication 1, dans lequel ladite instruction pour la réduction de la puissance d'au moins une porteuse de liaison inverse secondaire comprend :

la réduction d'une ou de plusieurs parmi les puissances de canaux pilote, de données et d'indicateur de débit de données sur une première porteuse secondaire ; la réduction d'une puissance pour une commande de source de données vers un niveau par défaut sur une deuxième porteuse secondaire ;
la réduction d'une puissance pour une ou de plusieurs parmi les puissances de canaux pilote et d'indicateur de débit de données sur ladite deuxième porteuse secondaire jusqu'à ce qu'il y ait suffisamment de marge pour l'amplificateur de puissance ou jusqu'à ce que les puissances des canaux pilote et d'indicateur de débit de données aient été réduites ;
la réduction d'une puissance pour au moins un canal de commande de débit de données sur ladite deuxième porteuse secondaire jusqu'à ce qu'il y ait suffisamment de marge pour l'amplificateur de puissance ou jusqu'à ce que l'au moins une puissance de canal de commande de débit de données ait été réduite ;
la réduction d'une puissance pour au moins un canal d'accusé de réception sur ladite deuxième porteuse secondaire jusqu'à ce qu'il y ait suffisamment de marge pour l'amplificateur de puissance ou jusqu'à ce que la puissance du canal d'accusé de réception ait été réduite ; et
la réduction d'une puissance pour l'au moins un canal pilote et ledit canal de commande de source de données sur ladite deuxième porteuse secondaire jusqu'à ce qu'il y ait suffisamment de marge pour l'amplificateur de puissance ou jusqu'à ce l'au moins une puissance de canal pilote et de commande de débit de données aient été réduites.

12. Terminal d'accès selon la revendication 1, dans lequel lesdites instructions pour la réduction de la puissance pour fournir une marge suffisante pour ledit amplificateur de puissance comprend la réduction de la puissance de ladite au moins une porteuse de liaison secondaire avant la réduction de la puissance de ladite porteuse de liaison inverse primaire ;
ladite instruction pour la réduction de la puissance d'au moins une porteuse de liaison inverse secondaire comprend la réduction de la puissance dans un ordre suivant :

réduction d'une ou de plusieurs parmi les puissances de canaux pilote, de données et d'indicateur de débit de données sur une première porteuse secondaire ;
réduction de la puissance pour un canal de source de données sur une deuxième porteuse secondaire ;
réduction de la puissance pour une ou plusieurs des puissances des canaux de données et d'indicateur de débit inverse sur ladite deuxième porteuse secondaire ; réduction de la puissance pour au moins un canal de commande de débit de données sur ladite deuxième porteuse secondaire ;
réduction de la puissance pour au moins un canal d'accusé de réception sur ladite deuxième porteuse secondaire ;
réduction de la puissance pour au moins un canal pilote et ledit canal de source de données sur ladite deuxième porteuse secondaire ; et
ladite instruction pour la réduction de la puissance d'une porteuse de liaison inverse primaire comprend la réduction d'une puissance dans un ordre suivant :

réduction d'une puissance de canal de commande de source de données vers un niveau par défaut ;
la réduction d'une puissance pour au moins un canal de commande de débit de données sur ladite porteuse de liaison inverse primaire jusqu'à ce qu'il y ait suffisamment de marge pour l'amplificateur de puissance ou jusqu'à ce que l'au moins une puissance de canal de commande de débit de données ait été réduite ;
la réduction d'une puissance pour au moins un canal d'accusé de réception sur ladite porteuse de liaison inverse primaire jusqu'à ce qu'il y ait suffisamment de marge pour l'amplificateur de puissance ou jusqu'à ce que ladite au moins une puissance de canal d'accusé de réception ait été réduite ; et
la réduction d'une ou plusieurs des puissances des canaux pilote, de données, indicateur de débit inverse et dudit canal de commande de source de données jusqu'à ce qu'il y ait suffisamment de marge.

13. Terminal d'accès selon la revendication 1, dans lequel ladite instruction pour réduire la puissance d'au moins une porteuse de liaison inverse secondaire comprend :

la réduction d'une ou de plusieurs parmi les puissances de canaux pilote et de données sur une première porteuse secondaire ;
la réduction de la puissance pour une ou de plusieurs parmi les puissances de canaux de données sur une deuxième porteuse secondaire ; et
la réduction d'une puissance pour au moins un canal à l'origine d'une charge implicite supplémentaire sur ladite deuxième porteuse secondaire.

14. Terminal d'accès selon la revendication 1, dans lequel ladite instruction pour réduire la puissance d'au moins une porteuse de liaison inverse secondaire comprend :

la réduction d'une ou de plusieurs parmi les puissances de canaux pilote et de données sur une première porteuse secondaire ;
la réduction de la puissance pour une ou de plusieurs parmi les puissances de canaux de données sur une deuxième porteuse secondaire ;
la réduction de la puissance pour au moins un canal à l'origine d'une charge implicite supplémentaire sur ladite deuxième porteuse secondaire ; et
ladite instruction pour réduire la puissance d'une porteuse de liaison inverse primaire comprend :

la réduction de la puissance pour au moins un canal à l'origine d'une charge implicite supplémentaire sur ladite porteuse de liaison inverse primaire jusqu'à ce qu'il y ait suffisamment de marge pour l'amplificateur de puissance ou jusqu'à ce que l'au moins une puissance de canal de commande de débit de données ait

31

été réduite ; et
la réduction d'une ou plusieurs des puissances des canaux ilote et de données jusqu'à ce qu'il y ait suffisamment de marge.

15. Procédé de réduction d'une puissance sur une liaison inverse comprenant les étapes suivantes :

la détermination si la marge d'un amplificateur de puissance dans un terminal d'accès est suffisante en :

additionnant un niveau de puissance de canal pilote, d'un niveau de puissance de canal à l'origine d'une charge implicite supplémentaire et d'un niveau de puissance de canal de trafic sur toutes les porteuses assignées et
déterminant si la somme est inférieure ou égale ou dépasse une puissance de transmission maximum autorisée pour l'amplificateur de puissance ; et
si la marge de l'amplificateur de puissance n'est pas suffisante, réduction de la puissance en réduisant la puissance de transmission d'un ou plusieurs canaux sur la liaison inverse selon les règles de réduction jusqu'à ce que la somme soit inférieure ou égale à la puissance de transmission maximum autorisée pour l'amplificateur de puissance afin de fournir une marge suffisante pour un amplificateur de puissance ;

la puissance étant réduite sur une liaison inverse ayant de multiples porteuses ;
la puissance d'au moins une porteuse de liaison inverse secondaire étant réduite ; et la puissance d'une porteuse de liaison inverse primaire étant réduite ;
l'au moins une porteuse de liaison inverse secondaire et la porteuse de liaison inverse primaire étant réduite dans l'ordre secondaire puis primaire.

16. Procédé de réduction de puissance sur une liaison inverse selon la revendication 15, dans lequel la réduction de puissance d'une porteuse de liaison inverse primaire comprend l'étape suivante :

réduction d'un ou plusieurs canaux à l'origine d'une charge implicite supplémentaire sur la porteuse de liaison inverse primaire jusqu'à ce qu'il y ait suffisamment de marge pour l'amplificateur de puissance ou jusqu'à ce que la puissance de la pluralité de canaux à l'origine d'une charge implicite supplémentaire ait été réduite.

17. Procédé de réduction de puissance sur une liaison inverse selon la revendication 16, dans lequel lesdits un ou plusieurs canaux à l'origine d'une charge implicite supplémentaire comprend un ou plus des canaux suivants :

un canal de commande de source de données, un canal de commande de débit de données, un canal d'accusé de réception, un canal pilote et un canal indicateur de débit inverse.

18. Procédé de réduction de puissance sur une liaison inverse selon la revendication 16, comprenant en outre :

la réduction d'au moins un canal de trafic sur la porteuse de liaison inverse primaire.

19. Procédé de réduction de puissance sur une liaison inverse selon la revendication 16, comprenant en outre l'étape suivante :

réduction d'au moins un canal pilote sur la porteuse de liaison inverse primaire.

20. Procédé de réduction de puissance sur une liaison inverse selon la revendication 16, comprenant en outre l'étape suivante :

réduction d'au moins un canal de trafic et d'au moins un canal pilote sur la porteuse de liaison inverse primaire.

21. Procédé de réduction de puissance sur une liaison inverse selon la revendication 15, dans lequel ladite étape de réduction de puissance d'au moins une porteuse de liaison inverse secondaire comprend :

la réduction d'une ou de plusieurs parmi les puissances de canaux pilote, de données et d'indicateur de débit de données.

22. Procédé de réduction de puissance sur une liaison inverse selon la revendication 15, dans lequel lesdites étapes pour fournir suffisamment de marge pour ledit amplificateur de puissance comprend en outre une réduction de puissance de l'au moins une porteuse de liaison inverse de secondaire avant la réduction de puissance de ladite porteuse de liaison inverse primaire, ladite étape de réduction de puissance d'au moins une porteuse de liaison inverse secondaire comprenant la réduction de la puissance dans un ordre suivant :

réduction d'une ou de plusieurs parmi les puissances des canaux pilote, de données et d'indicateur de débit inverse ; et

ladite étape de réduction de puissance d'une porteuse de liaison inverse primaire comprenant la réduction d'une puissance dans l'ordre suivant : réduction d'une puissance de canal de commande de source de données vers un niveau par défaut ;

réduction d'une puissance pour au moins un canal de commande de débit de données sur ladite porteuse de liaison inverse jusqu'à ce qu'il y ait suffisamment de marge pour l'amplificateur de puissance ou jusqu'à ce que l'au moins une puissance de canal de commande de débit de données ait été réduite ;

réduction d'une puissance pour au moins un canal d'accusé de réception sur ladite porteuse de liaison inverse jusqu'à ce qu'il y ait suffisamment de marge pour l'amplificateur de puissance ou jusqu'à ce que ladite au moins une puissance de canal d'accusé de réception ait été réduite ; et réduction d'une ou de plusieurs parmi les puissances des canaux pilote, de données, d'indicateur de débit inverse et dudit canal de commande de source de données jusqu'à ce qu'il y ait suffisamment de marge.

23. Procédé de réduction de puissance sur une liaison inverse selon la revendication 15, dans lequel ladite étape de réduction de puissance d'au moins une porteuse de liaison inverse secondaire comprend :

la réduction d'une ou plusieurs des puissances des canaux pilote et de données.

24. Procédé de réduction de puissance sur une liaison inverse selon la revendication 15, dans lequel :

ladite étape de réduction de puissance d'au moins une porteuse de liaison inverse secondaire comprend la réduction d'une ou plusieurs des puissances des canaux pilote et de données ; et

ladite étape de réduction de puissance d'une porteuse de liaison inverse primaire comprend :

la réduction d'une puissance pour au moins un canal à l'origine d'une charge implicite supplémentaire sur ladite porteuse de liaison inverse primaire jusqu'à ce qu'il y ait suffisamment de marge pour l'amplificateur de puissance ou jusqu'à ce que l'au moins une puissance de canal de commande de débit de données ait été réduite ; et

la réduction d'une ou plusieurs des puissances des canaux pilote et de données jusqu'à ce qu'il y ait suffisamment de marge.

25. Procédé de réduction de puissance sur une liaison inverse selon la revendication 15, dans lequel ladite étape de réduction de puissance d'au moins une porteuse de liaison inverse secondaire comprend :

la réduction d'une ou de plusieurs parmi les puissances des canaux pilote, de données et d'indicateur de débit inverse sur une première porteuse secondaire ;

la réduction d'une puissance pour une commande de source de données vers un niveau par défaut sur une deuxième porteuse secondaire ;

la réduction d'une puissance pour une ou parmi les puissances des canaux de données et d'indicateur de débit inverse sur ladite deuxième porteuse secondaire jusqu'à ce qu'il y ait suffisamment de marge pour l'amplificateur de puissance ou jusqu'à ce que les puissances des canaux de données et d'indicateur de débit inverse aient été réduites ;

la réduction d'une puissance pour au moins un canal de commande de débit de données sur ladite deuxième porteuse secondaire jusqu'à ce qu'il y ait suffisamment de marge pour l'amplificateur de puissance ou jusqu'à ce que l'au moins une puissance du canal de commande de débit de données ait été réduite ;

la réduction d'une puissance pour au moins un canal d'accusé de réception sur ladite deuxième porteuse secondaire jusqu'à ce qu'il y ait suffisamment de marge pour l'amplificateur de puissance ou jusqu'à ce que la puissance du canal d'accusé de réception ait été réduite ; et

la réduction d'une puissance pour au moins un canal pilote et ledit canal de source de données sur ladite deuxième porteuse secondaire jusqu'à ce qu'il y ait suffisamment de marge pour l'amplificateur de puissance ou jusqu'à ce que l'au moins une puissance des canaux pilote et de source de données aient été réduites.

**26.** Procédé de réduction de puissance sur une liaison inverse selon la revendication 15, dans lequel lesdites instructions pour la réduction de puissance pour fournir suffisamment de marge pour ledit amplificateur de puissance comprennent la réduction d'une puissance de ladite au moins une porteuse de liaison inverse secondaire avant la réduction de puissance de ladite porteuse de liaison inverse primaire, ladite étape de réduction de puissance de l'au moins une porteuse de liaison inverse secondaire comprenant la réduction de la puissance dans un ordre suivant :

réduction d'une ou de plusieurs parmi les puissances des canaux pilote, de données et d'indicateur de débit inverse sur une première porteuse secondaire ;
réduction de puissance pour un canal de source de données sur une deuxième porteuse secondaire ;
réduction de puissance pour une ou de plusieurs parmi les puissances des canaux de données et d'indicateur de débit inverse sur ladite deuxième porteuse secondaire ;
réduction de puissance pour au moins un canal de commande de source de données sur ladite deuxième porteuse secondaire ;
réduction de puissance pour au moins un canal d'accusé de réception sur ladite deuxième porteuse secondaire ;
réduction de puissance pour au moins un canal pilote et ledit canal de source de données sur ladite deuxième porteuse secondaire ; et
ladite étape de réduction de puissance d'une porteuse de liaison inverse primaire comprend la réduction de puissance dans l'ordre suivant :

réduction d'une puissance de canal de commande de source de données vers un niveau par défaut ;
réduction d'une puissance pour au moins un canal de commande de débit de données sur ladite porteuse de liaison inverse primaire jusqu'à ce qu'il y ait suffisamment de marge pour l'amplificateur de puissance ou jusqu'à ce que l'au moins une puissance de canal de commande de débit de données ait étant réduite ;
réduction de puissance pour au moins un canal d'accusé de réception sur ladite porteuse de liaison inverse primaire jusqu'à ce qu'il y ait suffisamment de marge pour l'amplificateur de puissance ou jusqu'à ce que l'au moins une puissance de canal d'accusé de réception ait été réduite ; et
réduction d'une ou de plusieurs parmi les puissances des canaux pilote, de données, d'indicateur de débit inverse et dudit canal de commande de source de données jusqu'à ce qu'il y ait suffisamment de marge.

**27.** Procédé de réduction de puissance sur une liaison inverse selon la revendication 15, dans lequel ladite étape de réduction de la puissance de transmission d'un ou plusieurs canaux sur la liaison inverse selon des règles de réduction de puissance pour réduire la puissance d'au moins une porteuse de liaison inverse secondaire comprend :

la réduction d'une ou de plusieurs parmi les puissances de canaux pilote et de données sur une première porteuse secondaire ;
la réduction de puissance pour une ou plusieurs parmi les puissances de canaux de données sur une deuxième porteuse secondaire ; et
la réduction de puissance pour au moins un canal à l'origine d'une charge implicite supplémentaire sur ladite deuxième porteuse secondaire.

**28.** Procédé de réduction de puissance sur une liaison inverse selon la revendication 15, dans lequel ladite étape de réduction de la puissance de transmission d'un ou plusieurs canaux sur la liaison inverse selon des règles de réduction de puissance pour réduire la puissance d'au moins une porteuse de liaison inverse secondaire comprend :

la réduction d'une ou de plusieurs parmi les puissances de canaux pilote et de données sur une première porteuse secondaire ;
la réduction de puissance pour une ou plusieurs parmi les puissances de canaux de données sur une deuxième porteuse secondaire ;
la réduction de puissance pour au moins un canal à l'origine d'une charge implicite supplémentaire sur ladite deuxième porteuse secondaire ; et
ladite étape de réduction de puissance d'une porteuse de liaison inverse primaire comprend :

la réduction de puissance pour au moins un canal à l'origine d'une charge implicite supplémentaire sur ladite porteuse de liaison inverse primaire jusqu'à ce qu'il y ait suffisamment de marge pour l'amplificateur de puissance ou jusqu'à ce que l'au moins une puissance de canal de commande de débit de données ait été réduite ; et
la réduction d'une ou de plusieurs parmi les puissances de canaux pilote et de données jusqu'à ce qu'il y ait suffisamment de marge.

FIG. 1A
PRIOR ART

106A

SUBSCRIBER
STATION

106B

SUBSCRIBER
STATION

106C

SUBSCRIBER
STATION

104

NETWORK

130

BASE
STATION
CONTROLLER

160

BASE
STATION

**FIG. 1B**

**PRIOR ART**

EP 1 905 170 B1

**FIG. 2**

EP 1 905 170 B1

EP 1 905 170 B1

252

254

256 DEMODULATOR → 258 DECODER →

RPC

AVE AGC →

264 TRANSMITTER GAIN CONTROL

AGC SIGNAL

RF FRONT END

$G_T, G_D, G_A$

260 MODULATOR ← 259 ENCODER ←

106

**FIG. 3**
**PRIOR ART**

FIG. 4
PRIOR ART

**FIG. 5   PRIOR ART**

502

COMPUTE TOTAL
POWER TO PILOT
CHANNEL POWER
RATIO "R"

504

$R < R_M$ ?

YES → 506

SET
$B_D = B_A = 1$

NO

508

COMPUTE DRC
BACK OFF

510

$B_D \geqslant 0$ ?

YES → 512

SET $B_D$;
SET $B_A = 1$

NO

514

GATE OFF DRC

516

COMPUTE ACK
BACK OFF

518

$B_A \geqslant 0$ ?

YES → 520

SET $B_A$;
SET $B_D = 0$

NO

522

SET $B_D = B_A = 0$

FIG. 6
PRIOR ART

**FIG. 7**

EP 1 905 170 B1

START

3200 — IS THE NUMBER OF ASSIGNED CARRIERS ON THE RL > 1?

3202 — Is $TxT_{PA} \leq TxT_{PAmin}$ ?

NO

YES

3212 — PA HEADROOM SUFFICIENT?

3204 — PA HEADROOM SUFFICIENT ?

YES

NO

3215 — CONTINUE DATA AND OVERHEAD TRANSMISSIONS AT CURRENT POWER LEVEL IN ALL ASSIGNED CARRIERS

3217 — THROTTLE DATA POWER UNTIL $TxT_{PA}=TxT_{PAmin}$ OR PA HEADROOM IS SUFFICIENT

NO

3206 — THROTTLE ONE OR MORE OVERHEAD CHANNELS

YES

3214 — CONTINUE DATA AND OVERHEAD TRANSMISSIONS AT CURRENT POWER LEVEL IN ALL ASSIGNED CARRIERS

3200

3208 — PA HEADROOM SUFFICIENT?

YES

NO

3209 — CONTINUE DATA AND OVERHEAD TRANSMISSIONS AT CURRENT POWER LEVEL IN ALL ASSIGNED CARRIERS

3210 — THROTTLE POWER FOR PILOT, AND DATA CHANNELS

3200

FIG. 8

FIG. 9

**FIG. 10**

START

3200 — IS THE NUMBER OF ASSIGNED CARRIERS ON THE RL > 1?

YES → 3220 — FOR ALL "N" REVERSE LINK CARRIERS: $TxT_{PA} \leq TxT_{PAmin}$ ?

NO (loop back to START)

YES → 3222 — PA HEADROOM SUFFICIENT ?

YES → 3222A — CONTINUE DATA AND OVERHEAD TRANSMISSIONS AT CURRENT POWER LEVEL IN ALL ASSIGNED CARRIERS

NO → 3223 — ARE ALL OVERHEAD CHANNELS TRANSMITTING ON PRIMARY RL CARRIER?

NO → (A)

YES → 3223A — THROTTLE PILOT AND DATA CHANNELS ON SECONDARY RL CARRIERS WITH NO OVERHEAD CHANNELS UNTIL PA HEADROOM IS SUFFICIENT OR NO MORE POWER TO THROTTLE IN THE ABOVE CHANNELS → (E)

3200 (from 3220 NO branch) → 3221 — PA HEADROOM SUFFICIENT ?

YES → 3221A — CONTINUE DATA AND OVERHEAD TRANSMISSIONS AT CURRENT POWER LEVEL IN ALL ASSIGNED CARRIERS

NO → 3221B — THROTTLE DATA POWER UNTIL $TxT_{PA} = TxT_{PAmin}$ IN ALL CARRIERS OR PA HEADROOM IS SUFFICIENT → 3200

**FIG. 11**

46

EP 1 905 170 B1

NO → THROTTLE THE DATA CHANNEL ON SECONDARY RL CARRIERS WITH OVERHEAD AND RL TRAFFIC CHANNELS — 3231C

3231E

CONTINUE DATA AND OVERHEAD TRANSMISSIONS AT CURRENT POWER LEVEL IN ALL ASSIGNED CARRIERS

3231D

PA HEADROOM SUFFICIENT? — YES

A

3230

THROTTLE PILOT AND DATA, CHANNELS ON SECONDARY RL CARRIERS WITH ONLY TRAFFIC BUT NO OVERHEAD CHANNELS UNTIL PA HEADROOM IS SUFFICIENT OR NO MORE POWER TO THROTTLE IN THE ABOVE CHANNELS

3231

PA HEADROOM SUFFICIENT?

YES

3231B

CONTINUE DATA AND OVERHEAD TRANSMISSIONS AT CURRENT POWER LEVEL IN ALL ASSIGNED CARRIERS

— NO → THROTTLE ONE OR MORE OVERHEAD CHANNELS ON SECONDARY RL CARRIERS WITH OVERHEAD AND RL TRAFFIC CHANNELS

3232

3234B

CONTINUE DATA AND OVERHEAD TRANSMISSIONS AT CURRENT POWER LEVEL IN ALL ASSIGNED CARRIERS

3234

PA HEADROOM SUFFICIENT? — YES →

NO

THROTTLE THE PILOT CHANNEL ON SECONDARY RL CARRIERS WITH OVERHEAD AND RL TRAFFIC CHANNELS

3236

3238B

CONTINUE DATA AND OVERHEAD TRANSMISSIONS AT CURRENT POWER LEVEL IN ALL ASSIGNED CARRIERS

3238

PA HEADROOM SUFFICIENT? — YES →

NO

32205

THROTTLE ONE OR MORE OVERHEAD CHANNELS ON PRIMARY REVERSE LINK CARRIER

32205B

CONTINUE DATA AND OVERHEAD TRANSMISSIONS AT CURRENT POWER LEVEL IN ALL ASSIGNED CARRIERS

← YES

32205A

PA HEADROOM SUFFICIENT?

NO

THROTTLE POWER FOR PILOT AND DATA CHANNELS ON PRIMARY RL — 32206

3200

**FIG. 12**

EP 1 905 170 B1

(E)

3223D

3223C

PA HEADROOM
SUFFICIENT?

NO

YES

CONTINUE DATA AND
OVERHEAD
TRANSMISSIONS AT
CURRENT POWER LEVEL
IN ALL ASSIGNED
CARRIERS

31205

THROTTLE POWERFOR ONE
OR MORE OVERHEAD
CHANNLES ON PRIMARY RL

31205A

PA
HEADROOM SUFFICIENT?

YES

NO

31205B

CONTINUE DATA AND
OVERHEAD TRANSMISSIONS
AT CURRENT POWER LEVEL
IN ALL ASSIGNED CARRIERS

31206

THROTTLE POWER FOR
PILOT AND DATA CHANNELS
ON PRIMARY RL

3200

**FIG. 13**

B

221

**PA HEADROOM SUFFICIENT ?**

YES

NO

221A

221B

**CONTINUE DATA AND OVERHEAD TRANSMISSIONS AT CURRENT POWER LEVEL IN ALL ASSIGNED CARRIERS**

**THROTTLE DATA POWER UNTIL TxT2P=TxT2Pmin IN ALL CARRIERS OR PA HEADROOM IS SUFFICIENT**

200

**FIG. 14**

THROTTLE THE DATA and RRI ON SECONDARY RL CARRIERS WITH DRC, ACK AND RL TRAFFIC CHANNELS — 231C

CONTINUE DATA AND OVERHEAD TRANSMISSIONS AT CURRENT POWER LEVEL IN ALL ASSIGNED CARRIERS — 231E

231D

YES — PA HEADROOM SUFFICIENT? — NO →

THROTTLE DRC ON ALL SECONDARY RL CARRIERS

232

234

PA HEADROOM SUFFICIENT? — YES→

CONTINUE DATA AND OVERHEAD TRANSMISSIONS AT CURRENT POWER LEVEL IN ALL ASSIGNED CARRIERS — 234B

A

230

THROTTLE PILOT, DATA, AND RRI ON SECONDARY RL CARRIERS WITH ONLY TRAFFIC BUT NO DRC AND ACK UNTIL PA HEADROOM IS SUFFICIENT OR NO MORE POWER TO THROTTLE IN THE ABOVE CHANNELS

NO

236 — THROTTLE ACK ON ALL SECONDARY RL CARRIERS

238 — PA HEADROOM SUFFICIENT? — YES→

CONTINUE DATA AND OVERHEAD TRANSMISSIONS AT CURRENT POWER LEVEL IN ALL ASSIGNED CARRIERS — 238B

231

PA HEADROOM SUFFICIENT?

NO

NO

YES — 231B

CONTINUE DATA AND OVERHEAD TRANSMISSIONS AT CURRENT POWER LEVEL IN ALL ASSIGNED CARRIERS

231A — THROTTLE DSC CHANNEL TO DEFAULT LEVEL

240 — THROTTLE PILOT AND DSC CHANNELS ON SECONDARY RL CARRIERS

242 — PA HEADROOM SUFFICIENT? — YES→

CONTINUE DATA AND OVERHEAD TRANSMISSIONS AT CURRENT POWER LEVEL IN ALL ASSIGNED CARRIERS — 242B

NO

231AF

NO

CONTINUE DATA AND OVERHEAD TRANSMISSIONS AT CURRENT POWER LEVEL IN ALL ASSIGNED CARRIERS

PA HEADROOM SUFFICIENT?

YES — 231AG

F

**FIG. 15**

EP 1 905 170 B1

**FIG. 16**

*2205*

THROTTLE DSC
CHANNEL POWER ON
PRIMARY REVERSE
LINK CARRIER TO
DEFAULT LEVEL

*2205A*

PA
HEADROOM
SUFFICIENT?

YES — NO

*2205B*

CONTINUE DATA AND
OVERHEAD
TRANSMISSIONS AT
CURRENT POWER
LEVEL IN ALL
ASSIGNED CARRIERS

*2206*

THROTTLE POWER
FOR DRCS ON
PRIMARY RL

*2206A*

PA
HEADROOM
SUFFICIENT?

YES — NO

*2206B*

CONTINUE DATA AND
OVERHEAD
TRANSMISSIONS AT
CURRENT POWER
LEVEL IN ALL
ASSIGNED CARRIERS

*2208*

THROTTLE POWER
FOR ACK CHANNELS
ON PRIMARY RL

*2208A*

PA
HEADROOM
SUFFICIENT?

YES — NO

*2208B*

CONTINUE DATA AND
OVERHEAD
TRANSMISSIONS AT
CURRENT POWER
LEVEL IN ALL
ASSIGNED CARRIERS

*2210*

THROTTLE PILOT,
DATA, RRI AND DSC
POWER ON PRIMARY
RL CARRIER

*200*

E

223C

PA HEADROOM SUFFICIENT?

223D

CONTINUE DATA AND OVERHEAD TRANSMISSIONS AT CURRENT POWER LEVEL IN ALL ASSIGNED CARRIERS

—NO—    —YES▶

1205

THROTTLE DSC POWER TO DEFAULT LEVEL

**FIG. 17**

1205A

PA HEADROOM SUFFICIENT?

YES    NO

1205B

CONTINUE DATA AND OVERHEAD TRANSMISSIONS AT CURRENT POWER LEVEL IN ALL ASSIGNED CARRIERS

1206

THROTTLE POWER FOR DRCs ON PRIMARY RL

1206A

PA HEADROOM SUFFICIENT?

YES    NO

1206B

CONTINUE DATA AND OVERHEAD TRANSMISSIONS AT CURRENT POWER LEVEL IN ALL ASSIGNED CARRIERS

1208

THROTTLE POWER FOR ACK CHANNELS ON PRIMARY RL

1208A

PA HEADROOM SUFFICIENT?

YES    NO

1208B

CONTINUE DATA AND OVERHEAD TRANSMISSIONS AT CURRENT POWER LEVEL IN ALL ASSIGNED CARRIERS

1210

THROTTLE PILOT, DATA, RRI AND DSC POWER ON PRIMARY RL CARRIER

200

Non-Access
Stratum

Network Control
(CC/MM/GMM, etc.)

AMR
Voice

CS
Data

PS
Data

Access
Stratum

Radio Resource
Control (RRC)

Radio Access Bearers:
(numbered 1-n)

Layer 3

Radio Access Bearers: (numbered
1-n)

Layer 2

Packet Data
Convergence Protocol
(PDCP)

Radio Link Control (RLC)

Medium Access Control (MAC)

Logical Channels:  (DCCH,
CCCH,
PCCH,
BCCH,
DTCH)

Transport Channels:
(DCH, PCH, BCH, RACH, FACH)

Coding, Rate Matching,
Spreading, Modulation

Layer 1,
Physical Layer

Physical Channels:
(DPCH, P-CCPH, PRACH, S-CCPCH, AICH, PICH)

FIG. 18
PRIOR ART

EP 1 905 170 B1

FIG. 19

FIG. 20

9205

(D)

MEANS FOR
THROTTLING DSC
POWER TO DEFAULT
LEVEL

9205A

MEANS FOR
DETERMINING PA
HEADROOM
SUFFICIENT?

YES

NO

9205B

MEANS FOR
CONTINUING DATA
AND OVERHEAD
TRANSMISSIONS AT
CURRENT POWER
LEVEL IN ALL
ASSIGNED CARRIERS

9206

MEANS FOR
THROTTLING POWER
FOR DRCs ON RL

9206A

MEANS FOR PA
HEADROOM
SUFFICIENT?

YES

NO

9206B

MEANS FOR
CONTINUING DATA
AND OVERHEAD
TRANSMISSIONS AT
CURRENT POWER
LEVEL IN ALL
ASSIGNED CARRIERS

9208

MEANS FOR
THROTTLING POWER
FOR ACK CHANNELS
ON RL

9208A

MEANS FOR PA
HEADROOM
SUFFICIENT?

YES

NO

9208B

MEANS FOR
CONTINUING DATA
AND OVERHEAD
TRANSMISSIONS AT
CURRENT POWER
LEVEL IN ALL
ASSIGNED CARRIERS

9210

MEANS FOR
THROTTLING PILOT,
DATA, AND RRI
POWER ON RL
CARRIER

9200

# FIG. 21

START

93200 — MEANS FOR DETERMINING IS THE NUMBER OF ASSIGNED CARRIERS ON THE RL > 1?

93221 — MEANS FOR DETERMINING PA HEADROOM SUFFICIENT?

YES

93220 — MEANS FOR DETERMINING FOR ALL "N" REVERSE LINK CARRIERS: $TxT_{PA} \leq TxT_{PAmin}$ ?

NO

3221A — MEANS FOR CONTINUING DATA AND OVERHEAD TRANSMISSIONS AT CURRENT POWER LEVEL IN ALL ASSIGNED CARRIERS

93221B — MEANS FOR THROTTLING DATA POWER UNTIL $TxT_{PA}=TxT_{PAmin}$ IN ALL CARRIERS OR PA HEADROOM IS SUFFICIENT

NO

YES

93222 — MEANS FOR DETERMINING PA HEADROOM SUFFICIENT?

YES

93200

93223A — MEANS FOR THROTTLING PILOT and DATA CHANNELS ON SECONDARY RL CARRIERS WITH NO OVERHEAD CHANNELS UNTIL PA HEADROOM IS SUFFICIENT OR NO MORE POWER TO THROTTLE IN THE ABOVE CHANNELS

93223 — MEANS FOR DETERMINING ARE ALL OVERHEAD CHANNELS TRANSMITTING ON PRIMARY RL CARRIER?

YES

NO

3222A — MEANS FOR CONTINUING DATA AND OVERHEAD TRANSMISSIONS AT CURRENT POWER LEVEL IN ALL ASSIGNED CARRIERS

E

A

FIG. 22

93234B — MEANS FOR CONTINUING DATA AND OVERHEAD TRANSMISSIONS AT CURRENT POWER LEVEL IN ALL ASSIGNED CARRIERS

93238B — MEANS FOR CONTINUING DATA AND OVERHEAD TRANSMISSIONS AT CURRENT POWER LEVEL IN ALL ASSIGNED CARRIERS

93232 — MEANS FOR THROTTLING ONE OR MORE OVERHEAD CHANNELS ON SECONDARY RL CARRIERS WITH OVERHEAD AND RL TRAFFIC CHANNELS

93234 — MEANS FOR DETERMINING PA HEADROOM SUFFICIENT?

YES / NO

93236 — MEANS FOR THROTTLING THE PILOT CHANNEL ON SECONDARY RL CARRIERS WITH OVERHEAD AND RL TRAFFIC CHANNELS

93238 — MEANS FOR DETERMINING PA HEADROOM SUFFICIENT?

YES / NO

932206 — MEANS FOR THROTTLING POWER FOR PILOT AND DATA CHANNELS ON PRIMARY RL

93200

NO

932205 — MEANS FOR THROTTLING ONE OR MORE OVERHEAD CHANNELS ON PRIMARY REVERSE LINK CARRIER

932205A — MEANS FOR DETERMINING PA HEADROOM SUFFICIENT?

YES

932205B — MEANS FOR CONTINUING DATA AND OVERHEAD TRANSMISSIONS AT CURRENT POWER LEVEL IN ALL ASSIGNED CARRIERS

93231C — MEANS FOR THROTTLING THE DATA CHANNEL ON SECONDARY RL CARRIERS WITH OVERHEAD AND RL TRAFFIC CHANNELS

93231D — MEANS FOR DETERMINING PA HEADROOM SUFFICIENT?

YES / NO

93231E — MEANS FOR CONTINUING DATA AND OVERHEAD TRANSMISSIONS AT CURRENT POWER LEVEL IN ALL ASSIGNED CARRIERS

(A)

93230 — MEANS FOR THROTTLING PILOT AND DATA, CHANNELS ON SECONDARY RL CARRIERS WITH ONLY TRAFFIC BUT NO OVERHEAD CHANNELS UNTIL PA HEADROOM IS SUFFICIENT OR NO MORE POWER TO THROTTLE IN THE ABOVE CHANNELS

93231 — MEANS FOR DETERMINING PA HEADROOM SUFFICIENT?

YES 93231B — MEANS FOR CONTINUING DATA AND OVERHEAD TRANSMISSIONS AT CURRENT POWER LEVEL IN ALL ASSIGNED CARRIERS

**FIG. 23**

FIG. 24

93223D — MEANS FOR CONTINUING DATA AND OVERHEAD TRANSMISSIONS AT CURRENT POWER LEVEL IN ALL ASSIGNED CARRIERS

93223C — MEANS FOR DETERMINING PA HEADROOM SUFFICIENT?

E

YES

NO

931205 — MEANS FOR THROTTLING POWER FOR ONE OR MORE OVERHEAD CHANNLES ON PRIMARY RL

931205A — MEANS FOR DETERMINING PA HEADROOM SUFFICIENT?

NO

931206 — MEANS FOR THROTTLING POWER FOR PILOT AND DATA CHANNELS ON PRIMARY RL

93200

YES

931205B — MEANS FOR CONTINUING DATA AND OVERHEAD TRANSMISSIONS AT CURRENT POWER LEVEL IN ALL ASSIGNED CARRIERS

**FIG. 25**

B

9221 — MEANS FOR DETERMINING PA HEADROOM SUFFICIENT ?

NO → 9221B — MEANS FOR THROTTLING DATA POWER UNTIL TxT2P=TxT2Pmin IN ALL CARRIERS OR PA HEADROOM IS SUFFICIENT → 9200

YES → 9221A — MEANS FOR CONTINUING DATA AND OVERHEAD TRANSMISSIONS AT CURRENT POWER LEVEL IN ALL ASSIGNED CARRIERS

60

FIG. 26

F

92205

MEANS FOR
THROTTLING DSC
CHANNEL POWER ON
PRIMARY REVERSE
LINK CARRIER TO
DEFAULT LEVEL

92205A

MEANS FOR
DETERMINING PA
HEADROOM
SUFFICIENT?

YES

92205B

MEANS FOR
CONTINUING DATA
AND OVERHEAD
TRANSMISSIONS AT
CURRENT POWER
LEVEL IN ALL
ASSIGNED CARRIERS

NO

92206

MEANS FOR
THROTTLING POWER
FOR DRCS ON
PRIMARY RL

92206A

**FIG. 27**

MEANS FOR
DETERMINING PA
HEADROOM
SUFFICIENT?

YES

92206B

MEANS FOR
CONTINUING DATA
AND OVERHEAD
TRANSMISSIONS AT
CURRENT POWER
LEVEL IN ALL
ASSIGNED CARRIERS

NO

92208

MEANS FOR
THROTTLING POWER
FOR ACK CHANNELS
ON PRIMARY RL

92208A

MEANS FOR
DETERMINING PA
HEADROOM
SUFFICIENT?

YES

92208B

MEANS FOR
CONTINUING DATA
AND OVERHEAD
TRANSMISSIONS AT
CURRENT POWER
LEVEL IN ALL
ASSIGNED CARRIERS

NO

92210

MEANS FOR
THROTTLING PILOT,
DATA, RRI AND DSC
POWER ON PRIMARY
RL CARRIER

9200

**FIG. 28**

E

9223C — MEANS FOR DETERMINING PA HEADROOM SUFFICIENT?

NO

91205 — MEANS FOR THROTTLING DSC POWER TO DEFAULT LEVEL

YES

9223D — MEANS FOR CONTINUING DATA AND OVERHEAD TRANSMISSIONS AT CURRENT POWER LEVEL IN ALL ASSIGNED CARRIERS

91205A — MEANS FOR DETERMINING PA HEADROOM SUFFICIENT?

YES

91205B — MEANS FOR CONTINUING DATA AND OVERHEAD TRANSMISSIONS AT CURRENT POWER LEVEL IN ALL ASSIGNED CARRIERS

NO

91206 — MEANS FOR THROTTLING POWER FOR DRCs ON PRIMARY RL

91206A — MEANS FOR DETERMINING PA HEADROOM SUFFICIENT?

YES

91206B — MEANS FOR CONTINUING DATA AND OVERHEAD TRANSMISSIONS AT CURRENT POWER LEVEL IN ALL ASSIGNED CARRIERS

NO

91208 — MEANS FOR THROTTLING POWER FOR ACK CHANNELS ON PRIMARY RL

91208A — MEANS FOR DETERMINING PA HEADROOM SUFFICIENT?

YES

91208B — MEANS FOR CONTINUING DATA AND OVERHEAD TRANSMISSIONS AT CURRENT POWER LEVEL IN ALL ASSIGNED CARRIERS

NO

91210 — MEANS FOR THROTTLING PILOT, DATA, RRI AND DSC POWER ON PRIMARY RL CARRIER

200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6594501 B

- US 20050147022 A

**Non-patent literature cited in the description**

- cdma2000 High Rate Packet Data Air Interface Specification. *3GPP2 C.S0024,* 27 October 2000